# EUROPEAN PATENT SPECIFICATION

(11) **EP 3 027 029 B1**
(45) Date of publication and mention of the grant of the patent: **21.07.2021**
(21) Application number: 14803656.9
(22) Date of filing: 29.05.2014
(51) Int. Cl.: A01N 59/16, A01C 1/02, A01H 1/04, A01H 3/04, A01H 5/00, A01H 5/10, A01H 7/00, A01N 59/00, A01P 1/00, A01P 21/00, A01P 3/00, A01N 25/08, A01N 25/22, A01N 59/20, A01N 25/00

(54) **ENHANCEMENT AND CONTROL OF SEED GERMINATION WITH COMPOSITIONS COMPRISING A TRANSITION METAL CATALYST AND AN OXIDANT**
VERBESSERUNG UND STEUERUNG EINER SAATKEIMUNG MITTELS ZUSAMMENSETZUNGEN MIT EINEM ÜBERGANGSMETALLKATALYSATOR UND EINEM OXIDATIONSMITTEL
AMÉLIORATION ET CONTRÔLE DE LA GERMINATION DES GRAINES AU MOYEN DE COMPOSITIONS COMPRENANT UN CATALYSEUR À MÉTAUX DE TRANSITION ET UN OXYDANT

(30) Priority: 29.05.2013 US 201361828617 P
(43) Date of publication of application: 08.06.2016
(73) Proprietor: University of Saskatchewan, Saskatoon, Saskatchewan S7N 2X8 (CA)
(72) Inventor: OLKOWSKI, Andrew A., Saskatoon, Saskatchewan S7K 3J7 (CA); LAARVELD, Bernard, Saskatoon, Saskatchewan S7V 0G6 (CA); TANINO, Karen K., Grasswood, Saskatchewan S7T 1A7 (CA)
(74) Representative: Eisenführ Speiser
(86) International application number: PCT/IB2014/061826
(87) International publication number: WO 2014/191961

(56) References cited:
- WO-A1-2013/000074
- WO-A1-2013/000074
- GB-A- 413 907
- GB-A- 983 920
- RU-C1- 2 025 926
- RU-C1- 2 088 086
- SU-A1- 1 210 383
- SU-A1- 1 544 334
- US-A1- 2009 305 888
- US-A1- 2009 305 888
- MAREK DOMARADZKI ET AL: "Oxygen fertilizers in technology of plant seeds. Influence of CaO 2 additive on the quality of pelleted seeds", CHEMIK, vol. 66, no. 5, 1 May 2012 (2012-05-01), pages 461-466, XP055359399,
- AKIO UCHIDA ET AL: "Effects of hydrogen peroxide and nitric oxide on both salt and heat stress tolerance in rice", PLANT SCIENCE, vol. 163, no. 3, 1 September 2002 (2002-09-01), pages 515-523, XP055359526, IE ISSN: 0168-9452, DOI: 10.1016/S0168-9452(02)00159-0
- NGO, Q.B. ET AL.: 'Effects of nanocrystalline powders (Fe, Co and Cu) on the germination, growth, crop yield and product quality of soybean ( Vietnamese species DT-51' ADVANCES IN NATURAL SCIENCE AND NANOTECHNOLOGY vol. 5, 28 February 2014, pages 1 - 7, XP055297321

## Description

### Technical Field

The present invention pertain to methods for the improved protection and germination of seeds. Some embodiments of the present invention pertain to methods that can enhance and/or control germination of seeds. The disclosure also pertains to compositions that are used in the methods of the invention.

### Background

Agriculture is an extremely important field. The efficient growth of crops is becoming more and more important as the world's population grows. The efficient storage and use of seeds is important. Seeds must be stored under conditions such that they retain viability and do not germinate prematurely. Once seeds have been sown, it is desirable that the seeds germinate quickly and uniformly. Fast germination of seed can, for example, allow for the faster growth of a crop from seed, and/or can crowd out weeds or undesired plant species that might otherwise compete with the desired crop for light and nutrients while the crop is growing. Enhancing germination may allow crops to be grown in regions where the growing season would be too short to grow such crops under ordinary conditions, and also enable avoidance of summer heat stress and frost damage through earlier maturity.

Enhanced germination of seeds can also be important in other contexts. For example, malting is the process of converting cereal grains to malt, an ingredient in a number of beverages and food products. In the process of malting, the grains are made to germinate by soaking in water, and then are halted from further germination by drying with hot air. The malting process activates enzymes required to modify starches in the grain to sugar and to break down proteins in the grain. Rapid and/or uniform germination is important for the malting process or the resultant product.

Sometimes it is desired to control germination of a seed, for example by preventing undesired germination of the seed under humid storage conditions. Currently, measures such as plant hormones and cooling are used to prevent undesired sprouting of seeds.

Preventing growth of microorganisms, such as fungi or bacteria, during seed germination is a desirable outcome.

US 2009/0305888 to Li et al. teaches compositions and methods for resolving bioavailable oxygen supply to plants subjected to hypoxic stresses. A composition comprising an oxidizing agent is provided and the level and rate of oxygen released from the composition is controlled. GB 413907 teaches a process for the treatment of seeds with hydrogen peroxide, true peroxides or true per-salts in which the seeds are treated with concentrations higher than a value corresponding to a content of 3% hydrogen peroxide to free the seeds from injurious organisms.

SU 1210383 teaches a method of isolating non-symbiotic nitrogen-fixing microorganisms. As part of the method, plant seeds are sterilized in 30% hydrogen peroxide for 20 minutes.

RU 2025926 teaches a method of stimulating plant growth by mixing hydrogen peroxide and copper ions in an aqueous solution that is used to treat seeds and irrigate the plants.

RU 2088086 teaches a method of stimulating plant growth using an aqueous solution of hydrogen peroxide, oxalic acid and copper that is used to treat seeds and irrigate the plants.

Domaradzki et al., Chemik 2012, 66(5):461-466, teaches a method of seed pelleting incorporating calcium peroxide to protect the pelleted seeds against reduced germination ability under high water content conditions.

There remains a need for compositions and methods to control and/or enhance seed germination and/or root formation and promote bud break in woody plants such as deciduous fruit trees. Such compositions and methods may have utility, for example, in the fields of agriculture, forestry, malting, horticulture, feed and food industries, and the like.

The foregoing examples of the related art and limitations related thereto are intended to be illustrative and not exclusive. Other limitations of the related art will become apparent to those of skill in the art upon a reading of the specification and a study of the drawings.

### Summary

The following embodiments and aspects thereof are described and illustrated in conjunction with systems, tools and methods.

One aspect of the disclosure provides a composition for enhancing or controlling germination of seeds comprising a transition metal catalyst and an oxidant. The oxidant is hydrogen peroxide. The transition metal catalyst can be a nanoparticulate catalyst bearing one or more transition metals; a carbon nanonotube (multi-walled or single-walled) impregnated with Fe, Mo, Rh, Co, or a combination thereof; and/or a transition metal salt, namely FeSO₄, or a cobalt salt.

Another aspect of the disclosure provides a composition for enhancing or controlling germination of seeds comprising a transition metal catalyst, an oxidant, and a buffer. In some embodiments, the buffer is a polyvalent organic acid such as citrate, ascorbate, oxalate, aconitate, isocitrate, alpha-ketoglutarate, succinate, fumarate, malate, oxaloacetate, pyruvate and/or a mixture thereof.

The invention relates to a method of enhancing germination of seeds comprising combining a transition metal catalyst that generates reactive oxygen species, an aqueous buffer and hydrogen peroxide in solution at an acidic pH and exposing the seeds to said solution for a period of between 30 minutes and 240 hours, wherein the transition metal catalyst comprises:
- a nanoparticulate catalyst bearing one or more transition metals, wherein the nanoparticulate catalyst comprises calcium carbonate, optionally present as calcite, with iron coated on or otherwise finely dispersed on or in the nanoparticle, and wherein the nanoparticulate catalyst is optionally present in an amount of between 1 ppm and 500 ppm;
- a multi-walled or single-walled carbon nanotube impregnated with Fe, Mo, Rh, Co, or a combination thereof; and/or
- a transition metal salt, wherein the transition metal salt is FeSO₄ or a cobalt salt.

Another embodiment provides a method of enhancing the germination of cereal grains for malting by exposing the seeds to the method of the invention.

Another aspect of the disclosure provides a coating for enhancing the germination of seeds comprising a transition metal catalyst and an oxidant, namely hydrogen peroxide, and a suitable carrier including gels such as cellulose, guar gum, or carboxy methyl cellulose.

The methods of the invention do one or more of: - hasten the emergence of radicles from seeds; stimulating and/or increasing the rate and/or degree of rooting by seeds;
- stimulate and/or increases shoot emergence and/or the emergence of leaves from seeds;
- cause seeds to germinate within a more narrow span of time than untreated seeds;
- disinfect seed prior to planting to protect seeds from pathogens such as disease and/or mold, including fungus or bacteria; improving seed vigour;- facilitate more efficient utilization of the growing season by a crop grown from seeds;
- break seed dormancy in seeds expressing a physical dormancy mechanism in the seed coat;
- increase utilization of photosynthetic capacity by plants grown from seeds.

Another aspect of the disclosure provides a method of promoting bud break in woody plants such as deciduous fruit trees by exposing the plants or their flower buds to a composition or solution having a transition metal catalyst and an oxidant, namely hydrogen peroxide.

In addition to the exemplary aspects and embodiments described above, further aspects and embodiments will become apparent by reference to the drawings and by study of the following detailed descriptions.

### Brief Description of the Drawings

Exemplary embodiments are illustrated in referenced figures of the drawings.
Figure 1 shows the chemistry of the catalytic system according to one example embodiment.
Figure 2 shows a precipitate formed in the production of an exemplary embodiment of a transition metal catalyst comprising iron nano-particulates generated from high iron well water.
Figures 3A and 3B show a comparison of the dissolved oxygen levels (DO) in water containing a catalytic composition according to example embodiments of the invention, as compared with water alone or water containing 0.35% hydrogen peroxide (HP). Figure 3C shows oxygen release by transition metals either in salt form or as multi-walled carbon nanotubes (MWCNT) impregnated with Fe, Cu, Cu and Fe, or Co and Rh and Mo.
Figure 4 shows radicle emergence and root development in a control culture (left tray) and treated culture (right tray) of barley seeds after 30 hours of incubation. Left tray contained seeds planted on medium saturated with tap water buffered with citrate to pH 4.9. Right tray contained seeds planted on medium saturated with complete catalytic medium according to an example embodiment of the present invention buffered with citrate to pH 4.9.
Figure 5 shows radicle emergence and root development in control culture (left tray) and treated culture (right tray) of barley seeds after 18 hours of incubation. Left tray contained seeds planted on medium saturated with tap water buffered with citrate to pH 4.9. Right tray contained seeds planted on medium saturated with complete catalytic medium according to an example embodiment of the present invention buffered with citrate to pH 4.9.

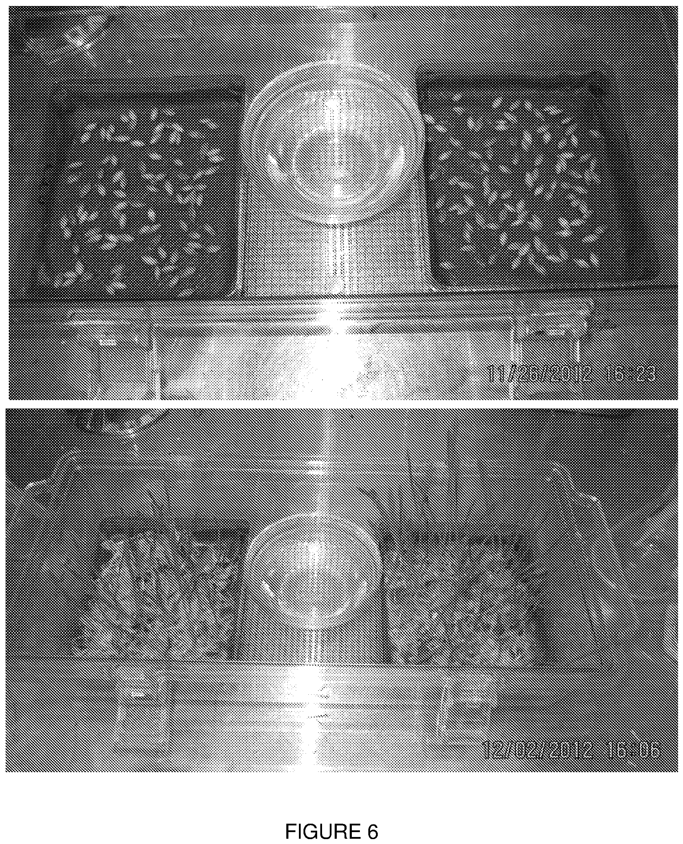

Figure 6 shows differences in shoot emergence and development from barley seeds between control culture (bottom panel, left tray) and treated culture (bottom panel, right tray). For comparison, the top panel shows the cultures at the time when the seeds were just planted, whereas bottom panel shows the same cultures after 7 days of incubation. On each respective panel, the left tray contained approximately 100 seeds planted on medium saturated with tap water buffered with citrate to pH 4.9, and the right tray contained approximately 100 seeds planted on medium saturated with complete catalytic medium according to an example embodiment buffered with citrate to pH 4.9.
Figure 7 shows microscopic images of barley seed steeped in control medium (left panel) and barley seed steeped in catalytic medium comprising a transition metal catalyst and hydrogen peroxide according to one example embodiment (right panel). Digital magnification approximately 250x. Both seeds were exposed to respective media for 12 hours.
Figure 8 shows the variation over time of both pH and dissolved oxygen (DO) levels in control and catalytic treatment solutions as tested in some of the examples described herein.
Figure 9 shows the germination of barley seeds at 22°C for 'Meredith' (left panel) and 'Copeland' (right panel) malting barley over time with and without catalytic treatment.
Figure 10 shows the germination of barley seeds at 15 and 10°C for 'Merideth (left panels) and 'Copeland' (right panels) malting barley over time with and without catalytic treatment.
Figure 11 shows the germination of chickpea cultivar 'Cory' at different temperatures over time, with and without catalytic seed treatment.
Figure 12 shows the germination of chickpea cultivar 'Consul' at different temperatures over time, with and without catalytic seed treatment.
Figure 13 shows the germination of chickpea cultivar 'Leader' at different temperatures over time, with and without catalytic seed treatment.
Figure 14 shows the germination of bean cultivar 'Sol' at different temperatures over time, with and without catalytic seed treatment.
Figure 15 shows the germination of bean cultivar 'WM-2' at different temperatures over time, with and without catalytic seed treatment.
Figure 16 shows the germination of soybean cultivar 'TH33003R2Y' at different temperatures over time, with and without catalytic seed treatment.
Figure 17 shows the germination of soybean cultivar 'Pool T34R' at different temperatures over time, with and without catalytic seed treatment.
Figure 18 shows the germination of lentil cultivar 'Greenland' 2004 at different temperatures over time, with and without catalytic seed treatment.
Figure 19 shows the germination of lentil cultivar 'Greenland' 2006 at different temperatures over time, with and without catalytic seed treatment.
Figure 20 shows the germination of lentil cultivar 'Maxim' 2004 at different temperatures over time, with and without catalytic seed treatment.
Figure 21 shows the germination of corn cultivar 'Extra Early Supersweet' at different temperatures over time, with and without catalytic seed treatment.
Figure 22 shows the germination of onion cultivar 'Early Yellow Globe' at different temperatures over time, with and without catalytic seed treatment.
Figure 23 shows the germination of cucumber cultivar 'Pioneer F1 Hybrid' at different temperatures over time, with and without catalytic seed treatment.
Figure 24 shows the germination of bean cultivar 'Improved Golden Wax' at different temperatures over time, with and without catalytic seed treatment.
Figure 25 shows the germination of sweet pea cultivar 'Bijou Mix' at different temperatures over time, with and without catalytic seed treatment.
Figure 26 shows the germination of seeds of the listed cultivars at different times at 23°C after seed priming with or without catalytic treatment.
Figure 27 shows the results of an experiment demonstrating the ability of catalytic treatment according to an example embodiment to prevent microbial growth in germinating lentil cultivar 'Greenland' 2006. Red arrows indicate examples of bacterial and/or fungal growth on lentils.
Figure 28 shows the results of an experiment demonstrating the ability of catalytic treatment according to an example embodiment to prevent microbial growth in germinating lentils ('Greenland'), peas ('Meadow'), soy beans ('Pool T34R'), chick peas ('Leader'), and beans ('CDC Sol') after 5 days with either catalytic treatment or treatment in buffer only (control).
Figure 29 shows experimental results evaluating the ability of catalytic treatment according to an example embodiment to prevent microbial growth in forage seeds of Kura Clover (*Trifolium ambiguum* 'Endura') and Cicer milkvetch (*Astragalus cicer* 'Oxley') after 8 days of germination.

### Description

Throughout the following description specific details are set forth in order to provide a more thorough understanding to persons skilled in the art..

As used herein, enhancing the germination of seeds refers to one or more of: speeding up the process of germination of seeds (i.e. decreasing the amount of time required for seeds to germinate); promoting or speeding up radicle emergence from seeds; promoting or speeding up seedling emergence from soil/growing media; promoting or speeding up rooting from seeds; promoting or speeding up shoot formation from seeds; promoting or speeding up leaf formation from seeds; making the process of germination more uniform within a population of seeds (i.e. causing a greater number of seeds within a population of seeds to germinate at approximately the same time as compared with untreated seeds); and/or increasing the number of seeds within a population of seeds to germinate.

As used herein, enhancing seedling growth refers to a higher level of shoot and/or root growth on the seedling relative to untreated control, or to other differential characteristics that indicate that a seedling is healthier or likely to grow faster than an untreated control. Root growth and shoot growth may be assessed for example visually or by weighing root or shoot mass, optionally by weighing dry weight biomass. In some embodiments, average shoot height and average root length can be used to assess whether seedling growth is enhanced relative to untreated controls, although the inventors have found that these parameters are not necessarily as useful as indicators of enhanced seedling growth as measuring root or shoot mass. In some embodiments, enhancing seedling growth refers to increasing the number of leaves formed on a seedling after a predetermined time period relative to an untreated control. In some embodiments in which the seeds are chickpea seeds, enhanced seedling growth means that the internode length is reduced relative to an untreated control, which may be advantageous to reduce or avoid lodging.

As used herein, "seed" includes seed from both angiosperms and gymnosperms, as well as other plant materials that can be sown. In some embodiments, tubers such as seed potato tubers (i.e. the clonal (vegetative) tuber crop produced for the purpose of either planting for table/processing potatoes or for additional propagation) are subjected to catalytic treatment to enhance sprouting and growth from the seed tuber. "Seed" also includes true potato seed (i.e. the seed formed as a result of sexual fertilization of potato flowers).

As used herein, "controlling the germination of seeds" refers to preventing the undesired germination of seeds (e.g. preventing undesired germination of the seeds under humid storage conditions). In some embodiments, controlling the germination of seeds includes preventing the undesired sprouting of plant material, for example prevention of potatoes from sprouting during storage.

As used herein, "transition metal" means an element whose atom has an incomplete d sub-shell, or which can give rise to cations with an incomplete d sub-shell, including any element in the d-block of the periodic table, which includes groups 3 to 12 on the periodic table.

The invention relates to a method of enhancing germination of seeds comprising combining a transition metal catalyst that generates reactive oxygen species, an aqueous buffer and hydrogen peroxide in solution at an acidic pH and exposing the seeds to said combination for a period of between 30 minutes and 240 hours, wherein the transition metal catalyst comprises:
- a nanoparticulate catalyst bearing one or more transition metals, wherein the nanoparticulate catalyst comprises calcium carbonate, optionally present as calcite, with iron coated on or otherwise finely dispersed on or in the nanoparticle, and wherein the nanoparticulate catalyst is optionally present in an amount of between 1 ppm and 500 ppm;
- a multi-walled or single-walled carbon nanotube impregnated with Fe, Mo, Rh, Co, or a combination thereof; and/or
- a transition metal salt, wherein the transition metal salt is FeSO₄ or a cobalt salt.

In some embodiments, the aqueous buffer contains polyvalent organic acids. In some embodiments, the transition metal catalyst is an iron-based nanoparticulate catalyst.

Transition metal catalysts that are suitable for use in some embodiments of the present invention are described, for example, in WO 2013/000074. This document describes a biorefining method of processing a lignocellulosic biomass to separate lignin and hemicellulose from cellulose. The transition metal catalyst can promote reactions in which the lignocellulosic biomass is fractionated and depolymerized. In some described embodiments, the transition metal catalyst is a nanoparticulate catalyst that is formed by oxidizing a highly reduced solution of iron, such as groundwater that has not been exposed to oxygen. The nanoparticulates have at least one dimension less than about 500 nm, less than about 200 nm, or less than about 100 nm. In some embodiments, the nanoparticulates have an approximate size of about 10 nm to about 100 nm. In some embodiments, the nanoparticulate catalysts comprise calcium carbonate and iron, and the calcium carbonate creates a nucleation structure, with iron coated on or otherwise finely dispersed on or in the nanoparticle. In some embodiments, the calcium carbonate is present as calcite. In some embodiments, the iron is multivalent, primarily mono- and di-valent. In some embodiments, the nanoparticulates have a core structure comprising multivalent iron, at least one iron oxide, and at least one iron hydroxide. In some such embodiments, the core structure comprises calcium carbonate. In some embodiments, the presence of various elements in the water from which the nanoparticulate catalyst is formed may result in the formation of a heterogeneous catalyst with crystal imperfections that may enhance catalytic activity. In some embodiments, the nanoparticulate catalyst may comprise iron and a secondary metal, which may be a transition metal such as copper that is added to the aqueous solution from which the nanoparticulate catalyst is formed. In some embodiments, the catalyst is a carbon nanotube (CNT) (multi-walled CNT or single walled CNT) impregnated with Fe, Mo, Rh or Co, or combinations thereof. In some embodiments, the catalyst is a transition metal salt, namely FeSO₄, or a cobalt salt. Other transition metal catalysts can be used in some embodiments of the invention.

In some embodiments in which the transition metal catalyst comprises iron-based nanoparticulates, without being bound by theory, the oxidation state of iron in the catalytic nanoparticulates is unknown, but it is believed that 2⁺, 3⁺, 4⁺ and 5⁺ oxidation states are probable. Because the iron is capable of formation of species present in more than two oxidation states, the catalyst in principle has a very high catalytic potential.

The transition metal catalyst is incorporated into a catalytic medium that includes a buffer having an acidic pH and hydrogen peroxide. As taught in WO 2013/000074, such a catalytic medium can depolymerize ligno-cellulosic material such as straw and wood. Without being bound by theory, the present inventors believe that the transition metal catalyst and catalytic reaction medium act on ligno-cellulosic material present in the seed coat, and depolymerize molecules such as lignin, hemicellulose, cellulose, and other complex molecules. This can soften the seed coat, and can allow for better penetration of moisture to the seed, which can hasten germination and/or result in more synchronous germination in a population of seeds. Without being bound by theory, it is also believed that the catalytic process generates reactive oxygen species (ROS) (listed in the equations below) that are part of the natural biochemistry of the germination process. Without being bound by theory, it is believed that the intermediates that play the most essential role in seed conditioning (i.e. enhancing seed germination) include: H₂O₂, O₂, OH·, O₂⁻, and HO₂·. However, it should be understood that other probable intermediates involved in seed germination, and/or which interact with natural biochemical processes, may also be generated. Without being bound by theory, it is further believed that the sustained elevation of oxygen can enhance germination, and that the presence of reactive oxygen species generated by the catalytic medium including the transition metal catalyst may directly influence the germination process. Increased oxygenation has been shown to improve vigor and germination in aged seeds (Liu, G., Porterfield, D. M., Li, Y., & Klassen, W. (2012). Increased Oxygen Bioavailability Improved Vigor and Germination of Aged Vegetable Seeds. HortScience, 47(12), 1714-1721).

Further without being bound by theory, other papers of interest to postulating a mechanism by which catalytic treatment according to some embodiments can enhance seed germination include the following:
- Fry et al., "Fingerprinting of polysaccharides attacked by hydroxyl radicals in vitro and in the cell walls of ripening pear fruit", Biochem. J. (2001) 357, 729-737.
- El-Maarouf-Bouteau and Bailly, "Oxidative signaling in seed germination and dormancy", Plant Signaling & Behavior 3:3, 175-182; March 2008.
- Kranner et al., "Extracellular production of reactive oxygen species during seed germination and early seedling growth in Pisum sativum", Journal of Plant Physiology 167 (2010) 805-811.
- Roach et al., "Extracellular superoxide production, viability and redox poise in response to desiccation in recalcitrant Castanea sativa seeds", Plant, Cell and Environment (2010) 33, 59-75.
- Mueller et al., "In Vivo Cell Wall Loosening by Hydroxyl Radicals during Cress Seed Germination and Elongation Growth", Plant Physiology, August 2009, 150, 1855-1865.
- Lindsay and Fry, "Redox and wall-restructuring", Plant Cell Monogr (5), published online 28 October 2006.
- Miller and Fry, "Characteristics of xyloglucan after attack by hydroxyl radicals", Carbohydrate Research 332 (2001) 389-403.
- Kim et al., "Exposure of Iron Nanoparticles to Arabidopsis thaliana Enhances Root Elongation by Triggering Cell Wall Loosening", Environ. Sci. Technol. 2014, 48, 3477-3485.
- Bhaskaran et al., "Review on positive role of reactive oxygen species (ROS) in seed germination)", Int. J. Dev. Res. 4(1) (2014) 105-109.
- Barba-Espin et al., "Interaction between hydrogen peroxide and plant hormones during germination and the early growth of pea seedlings", Plant, Cell and Environment (2010) 33, 981-994.
- Oracz K, Bouteau HE, Farrant JM, Cooper K, Belghazi M, Job C, Job D, Corbineau F, Bailly C (2007) ROS production and protein oxidation as novel mechanisms for seed dormancy alleviation. Plant J 50: 452-465.

These papers show that reactive oxygen species are part of the plant germination mechanism across many plant species, and can be generated endogenously via peroxidase. Accordingly, these papers support that a potential mechanism of action of the catalytic treatment according to some embodiments may be via the provision of reactive oxygen species externally as an applied seed treatment, and would be expected to be effective across plant species.

The biochemical mechanisms of seed germination are highly conserved across different plant species. Since plant species have similar underlying biochemical pathways, it can be soundly predicted based on the experimental results presented herein that some embodiments of the present invention will have utility in enhancing the germination of seeds across plant species. Seed priming is a way of preparing seeds for planting using a partial germination process in which seeds are partially hydrated, without allowing radicle emergence. Primed seeds can exhibit enhanced germination rates and enhanced uniformity of germination. Also, seed priming has been implicated in improving the stress-tolerance of germinating seeds. Reactive oxygen species have been implicated in seed priming, and are part of the route to plant germination and stress tolerance, and for imprinting stress tolerance/memory during seed priming. (See Chen and Arora, "Priming memory invokes seed stress-tolerance", Environmental and Experimental Botany 94 (2013) 33- 45). Other references of interest with respect to seed priming include WO 2008/153388 of van Duijn et al. published 18 December 2008.

Reactive oxygen species-based signaling and resistance also plays a role in biotic and abiotic stress in plants. Thus, it is predicted that appropriate delivery of reactive oxygen species to plants through catalytic treatment in accordance with some embodiments may be beneficial in alleviating a number of different plant stresses, both biotic (e.g. diseases) and abiotic (e.g. temperature, salt concentration (either high salt concentration or low salt concentration), drought, anaerobic stress (e.g. as may be caused by freezing or flooding), and the like).

Based on the foregoing literature and the experiments described herein, it can be soundly predicted that treatment of seeds according to the method of the invention will enhance germination of those seeds, including under stressful conditions in some embodiments.

For example, treatment of plants with hydrogen peroxide (H₂O₂) for a prolonged period (e.g. from 8 hours (Wahid et al.) to 48 hours (Uchida et al.; Dias de Azevedo Neto et al.)) can enhance salt stress tolerance, as shown for example by the following references:
- Uchida et al., "Effects of hydrogen peroxide and nitric oxide on both salt and heat stress tolerance in rice", Plant Science 163 (2002) 515-523.
- Dias de Azevedo Neto et al., "Hydrogen peroxide pre-treatment induces salt-stress acclimation in maize plants", Journal of Plant Physiology 162 (2005) 1114-1122.
- Wahid et al., "Pretreatment of seed with H2O2 improves salt tolerance of wheat seedlings by alleviation of oxidative damage and expression of stress proteins", Journal of Plant Physiology 164 (2007) 283-294.

Additionally, resistance to stress can be produced by the endogenous expression of a hydrogen peroxide or reactive oxygen species producing enzyme such as oxalate oxidase endogenously (WO 1999/004013 of Altier et al., published 14 May 1999). Based on this and the experimental results presented herein, it can be soundly predicted that treatment of plants, including seeds or tubers, with catalytic compositions in accordance with some embodiments will enhance tolerance of plants to stressors including salt stress and other biotic or environmental stresses such as pathogens, including microorganisms (including fungus or bacteria), heat, cold, drought, flooding, anaerobic stress (e.g. as may be caused by flooding) or the like.

In some embodiments, the plant seed is from a cereal crop, an oilseed, a pulse or a legume crop. In some embodiments, the plant seed is from barley, malting barley, winter wheat, durum wheat, spring wheat, oat, rye, rice, corn, lentil, pea, chickpea, lupin, flax, hemp, bean, common bean, yellow bean, soybean, canola, rapeseed, mustard, sorghum, millet, quinoa, alfalfa or forage species. In some embodiments, the plant seed is from a vegetable crop, horticultural crop, or ornamental flower. In some embodiments, the plant seed is from a tree.

In some embodiments, the plant seed is from a grain crop, an oilseed, a pulse crop, a legume crop, a horticulture crop, a vegetable crop, a forestry species, or a forage crop. Examples of grain crops include barley, malting barley, winter wheat, durum wheat, spring wheat, corn, oat, rye, rice, sorghum, millet, quinoa, triticale, and the like. Examples of oilseed crops include flax, hemp, canola, corn, rapeseed, mustard, sunflower, safflower, soybean, sesame and the like. Examples of legume crops (including some pulses) include lentil, pea, chickpea, dry beans, lupin, soybeans, peanuts, clover, alfalfa, milkvetch and the like. Examples of vegetable crops include onion, cucumber, corn, sweet peas, and certain types of green beans and peas (e.g. beans and peas that are consumed as a vegetable rather than as a dried grain). Examples of forage crops include grasses, clover, alfalfa, milkvetch and the like. Examples of forestry crops include trees, including coniferous and deciduous trees, and shrubs. Exemplary species of trees common in Canada include white spruce (*Picea glauca*), black spruce (*Picea mariana*), pine species (such as lodgepole pine (*Pinus contorta*), white pine (*Pinus strobus*), whitebark pine (*Pinus albicaulis*) and the like), yellow cypress (*Callitropsis nootkatensis*), Douglas fir (*Pseudotsuga menziesii*), cedar species (such as Western red cedar (*Thuja plicata*) and the like), Eastern hemlock (*Tsuga canadensis*) or other hemlock species, poplar (e.g. *Populus balsamifera* and the like), aspen, willow, birch, and the like. Other tree species are common in other regions of the world, for example *Acacia* species and eucalyptus (*Eucalyptus sp*.)*.* Tree species utilized in agroforestry include hybrid poplar (*Populus x sp.*)*.* Numerous tree species are used in horticulture, some examples of which are Manchurian ash (*Fraxinus mandschurica* 'Mancana'), black walnut (*Juglans nigra*), scots pine (*Pinus sylvestris*), Colorado blue spruce (*Picea pungens*), and the like. Yellow cypress and whitebark pine are examples of coniferous trees. Poplar and birch are examples of deciduous tree species.

One skilled in the art would understand that pulse crops are grain legumes that are dry seeds, for example, dry beans, chickpeas and lentils, while horticulture crops include vegetable legumes (e.g. green beans and green peas). Legumes encompass plants which fix nitrogen, and include soybeans, milkvetch, pulse crops, clover, alfalfa, soybeans and the like.

One skilled in the art would also understand that forestry includes agroforestry (the production of very fast-growing trees in a plantation-like setting) and silviculture (the growth of tree seedlings for reforestation and agro-forestry). Thus, in some embodiments, catalytic compositions as described herein are used to enhance tree seed germination and seedling developments for such forestry applications. In some embodiments, catalytic compositions as described herein are used to enhance seed germination and seedling development in other horticultural fields, for example the production of trees and other plants for use in landscaping. In some embodiments, treatment of seeds with catalytic compositions as described herein may be used to break dormancy of seeds, including seeds of forestry species, to enable greater root growth and therefore faster establishment of forestry species, and/or to avoid pathogen attack (including by microbes such as bacteria and fungus) of forestry species.

In some embodiments, enhancing germination refers to promoting and/or speeding up the sprouting of seed tubers, for example, potatoes. Without being bound by theory, the meristems of seed tubers such as potatoes are located beneath a thin epidermal layer, thereby facilitating absorption and uptake of compositions according to some embodiments. Without being bound by theory, reactive oxygen species (ROS) may also play a role in promoting the sprouting of seed tubers. Further without being bound by theory, potato tuber dormancy and tree bud dormancy will break with stress, and the application of oxygen and/or reactive oxygen species (ROS) to a tuber may be a stress and/or signaling molecule that can break tuber and/or tree bud dormancy. Treatment of seed tubers prior to planting using catalytic compositions according to some embodiments could potentially break tuber and/or tree bud dormancy and/or increase the number of meristems (buds) breaking to form shoots. In some embodiments, compositions according to the present invention are used to protect seed tubers against diseases, mold or the like (including microorganisms such as fungus or bacteria) by killing any pathogens present on the seed tubers by exposing the seed tubers to a solution comprising a transition metal catalyst and hydrogen peroxide. In some embodiments, compositions according to the present invention are used to cause dormancy in seed tubers by applying the compositions at a sufficiently high concentration and/or for a sufficiently long period of time to render the seed tuber unable to sprout.

It is also disclosed that some compositions described above can be used on woody plants such as deciduous fruit trees to promote bud break. With global warming, in some regions tree flower buds are not exposed to sufficient chilling to satisfy the chilling requirement, i.e. the minimum period of cold weather needed to cause a fruit-bearing tree to blossom. This can result in fruit trees failing to break bud or having uneven bud break (i.e. buds may break across a wide time span across a given population of trees). Application of compositions described above to the fruit trees and/or fruit tree flower buds may be used to promote and/or cause more uniform bud break (i.e. to cause bud break to occur across all trees in a given population of trees within a more narrow span of time).

Without being bound by theory, it is believed that reactive oxygen species (ROS) may serve as a signaling factor for bud break in deciduous fruit trees and other woody plants. Application of a transition metal catalyst and hydrogen peroxide or a catalytic medium incorporating such a transition metal catalyst and hydrogen peroxide to the fruit trees and/or fruit tree flower buds may break dormancy and promote bud break (See e.g. Tanino et al., "Dormancy-breaking agents on acclimation and deacclimation on dogwood (Cornus sericea L.)", HortScience, 24(2):353-354, 1989. In that reference, hydrogen cyanamide treatment was used to effectively break dormancy. Hydrogen cyanamide is also known to inhibit catalase activity with subsequent accumulation of hydrogen peroxide, suggesting that hydrogen peroxide can break dormancy.). In some embodiments, compositions according to some embodiments of the present invention may break seed dormancy through alleviation of a physical or mechanical restraint of the testa (seed coat). Since seed germination is dependent upon growth of the radicle through the testa, the alleviation of the physical and mechanical constraints of the testa is also required for germination. In some embodiments, compositions according to some embodiments of the present invention may break seed dormancy through ROS signaling (Oracz et al., 2007; Mueller et al., 2012).

The catalytic medium for enhancing seed germination is prepared using a transition metal catalyst and hydrogen peroxide in an aqueous buffer at an acidic pH. In some embodiments, the catalytic medium includes an organic buffering compound. In some embodiments, the catalytic system includes an organic acid. In some embodiments, the organic acid is a polyvalent carboxylic acid. In some embodiments, the polyvalent carboxylic acid is citrate, ascorbate, oxalate, aconitate, isocitrate, alpha-ketoglutarate, succinate, fumarate, malate, oxaloacetate, or pyruvate. In some embodiments, the catalytic system includes a combination of two or more organic compounds and/or organic acids.

In some embodiments, a catalytic reaction medium including a transition metal catalyst and hydrogen peroxide, can be described as "self-regenerating" based on the sustained net generation of oxygen measurable as dissolved oxygen. Therefore, this catalytic reaction system cannot be explained by the principles of the Fenton reaction only. Without being bound by theory, theoretical analysis of the catalytic reaction system suggests that the chemistry of the reactions can be described as a combination of at least two reactions i.e. Fenton reaction and Haber-Weiss reaction. Using the example where the transition metal is iron and considering the classic Fenton reaction (Equation 1) and Haber-Weiss reaction (Equations 2 and 3)

1) Fe²⁺ + H₂O₂ → Fe³⁺ + OH· + OH⁻

2) H₂O₂ + OH· → H₂O + O₂⁻+ H⁺

3) H₂O₂+ O₂⁻ → O₂ + OH· + OH⁻

it is also necessary to consider reaction of the superoxide (O₂⁻) radical generated (Equation 2) in the presence of transition metal, thus it is necessary to consider the following reactions (Equations 4 and 5):

4) Fe³⁺ + O₂⁻ → Fe²⁺ + O₂

5) Fe²⁺ + O₂⁻ +2H⁺→ Fe³⁺ + H₂O

Without being bound by theory, it is believed that some combination of some or all of the following reactions (Equations 6 to 29) may be occurring, which are consistent with the sustained generation of oxygen and regeneration of hydrogen peroxide:

6) Fe²⁺ + H₂O₂ → Fe³⁺ + OH• + OH-

7) Fe²⁺ + H₂O₂ → Fe(H₂O₂)²⁺ and/or FeO²⁺

8) FeO²⁺ + H₂O₂ → Fe²⁺ + O₂ + H₂O

9) H₂O₂ + OH· → H₂O + O₂⁻+ H⁺

10) H₂O₂+ OH· → O₂₋· + H⁺ + H₂O

11) H⁺ + OH· → HO₂· + H₂O

12) Fe²⁺ + HO₂· → Fe³⁺ + HO₂⁻

13) Fe²⁺ + HO· → Fe³⁺ + HO⁻

14) Fe³⁺ + O₂⁻ → Fe²⁺ + O₂

15) Fe³⁺ + HO₂· → Fe²⁺ + H⁺ + O₂

16) Fe³⁺ + HO· → FeOH³⁺

17) Fe³⁺ + 30H⁻ → Fe(OH)₃

18) Fe³⁺ + O₂· → Fe²⁺ + O₂

19) H₂O₂+ OH· → OOH· + H₂O

20) OOH· + O₂⁻ → H₂O₂+ O₂

21) H₂O₂ + O₂⁻ → O₂ + OH· + OH⁻

22) H₂O₂+ OH· → HO₂· + H₂O

23) HO₂· + HO₂· → H₂O₂ + O₂

24) H₂O₂+ OH· → 2H₂O

25) 2O₂⁻ + 2H⁺ → O₂ + H₂O₂

26) HO₂· + Fe²⁺ → Fe³⁺ + H₂O₂

27) Fe²⁺ + O₂⁻ + 2H⁺ → Fe³⁺ + H₂O

28) HO· + HO₂· → H₂O + O₂

29) HO· + O₂· → OH⁻ + O₂

Further without being bound by theory, an additional mechanism for enhancing decomposition of ligno-cellulosic material from the seed or plant wall may be through the action of per-acids, which are generated in situ by the catalytic reaction and can interact with organic molecules. Such per-acids are the products generated from the reaction between hydrogen peroxide (present and generated during the catalytic process) and organic acids naturally present in cells, for example acetate, or acids such as formic, acetic, and propionic acids generated as by-products of catalytic degradation of lignin and other phenolics, as well as polymeric carbohydrates. The generic equation for synthesis of the said per-acids is depicted below:

30) 2 R-(C=O)OH + H₂O₂ → 2R-(C=O)O-O⁻ + 2H⁺

Studies by the inventors have shown that performate and peracetate are potent compounds capable of very efficient delignification of plant wall material. These compounds were also found to possess very powerful microbiocidal properties, which further supports the experimental data in the examples below in demonstrating the benefits of using a catalytic reaction according to some example embodiments in the prevention of microbial growth on treated seeds.

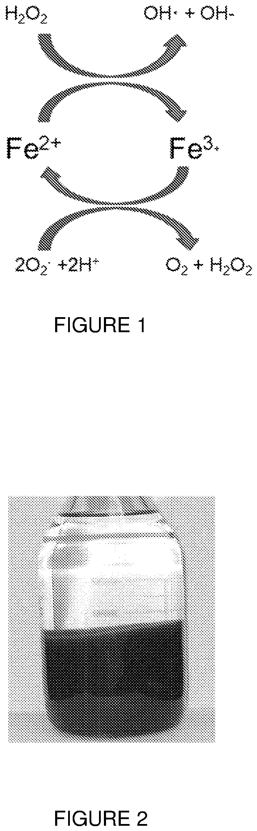

In some embodiments, a catalytic reaction system includes a citrate buffer with three ionisable groups in citric acid with pKa for carboxylic groups 1, 2, and 3 values 3.13, 4.76, and 6.40 respectively. Such a buffer provides ideal chemical conditions for such reactions to occur in cyclic mode, with regeneration of Fe³⁺ and Fe²⁺ and regeneration hydrogen peroxide. Figure 1 illustrates the cyclic nature of this process. The reaction involves redox cycling of iron (Figure 1 center, Equations 4 and 5), which is consistent with chemistry of classic Fenton reaction (Figure 1 top, and Equation 1) and Haber-Weiss reaction (Figure 1 bottom, and Equations 2, 3 and 6). Without being bound by theory, the process presented in Figure 1 explains the observed net generation of oxygen and likely sustainable nature of some embodiments of the present invention in terms of re-generation of hydrogen peroxide.

In some embodiments in which the catalytic reaction system includes a polyvalent carboxylic acid such as a citrate buffer, the polyvalent carboxylic acid acts as a chelant of mild to moderate strength, and acts to chelate metal ions and keep the metal ions in solution at pH values where the metals would normally precipitate.

In some embodiments in which the catalytic reaction system uses a polyvalent carboxylic acid that is a natural compound that is a part of many metabolic pathways (for example, citrate), and a transition metal catalyst that is naturally occurring (for example, iron-based nanoparticulates), the compositions and processes can be said to use "green chemistry" or sustainable chemistry because the components of the composition are all naturally occurring.

The relative concentrations of the components of a catalytic reaction system according to some embodiments of the invention can be adjusted depending on the particular application and the plant material to be treated. In some embodiments in which the transition metal catalyst is a nanoparticulate, the nanoparticulate catalyst is present in the catalytic medium at a concentration of between about 1 and about 500 ppm or any value therebetween, e.g. 2, 3, 4, 5, 6, 7, 8, 9, 10, 20, 30, 40, 50, 60, 70, 80, 90, 100, 125, 150, 175, 200, 225, 250, 275, 300, 325, 350, 375, 400, 425, 450, or 475 ppm, or any concentration as is required by a particular application. One skilled in the art would be able to conduct appropriate titrations to determine the acceptable and/or optimal amount of catalyst to be used in any given embodiment. In some embodiments in which the transition metal catalyst is a multi-walled carbon nanotube impregnated with a transition metal, the multi-walled carbon nanotube catalyst is present in an amount in the range of about 1% to about 10% by weight or any amount therebetween, e.g. 2, 3, 4, 5, 6, 7, 8 or 9%, or any concentration as is required by a particular application. In some embodiments in which the transition metal catalyst is a transition metal salt, the transition metal salt is present in an amount in the range of about 1% to about 10% by weight or any amount therebetween, e.g. 2, 3, 4, 5, 6, 7, 8 or 9%, or any concentration as is required by a particular application.

In some embodiments, the catalytic medium includes a polyvalent carboxylic acid at a concentration of between about 5 and 100 mM or any value therebetween, e.g. 10, 20, 30, 40, 50, 60, 70, 80 or 90 mM, or any concentration as is required by a particular application.

In some embodiments, the catalytic medium includes hydrogen peroxide as an oxidant in a concentration of between about 0.1% and 0.5% by volume (v/v), or any value therebetween, e.g. 0.2%, 0.3% or 0.4% by volume, or any concentration as is required by a particular application.

In some embodiments, the concentrations of transition metal catalyst, buffer and hydrogen peroxide used will be varied depending on the kind of seeds, the moisture content of the seeds, the seed coat structure of the seeds, the dormancy status of the seeds, and other factors. For example, different species of plants or different varieties of plants may have seed coat walls of varying thickness, the lignin structure of the seed coat may vary, or the chemical composition of the seed coat may vary. It is within the expected ability of one of ordinary skill in the art to determine empirically what conditions are suitable for a particular application given the teachings of this specification. In some embodiments, the parameters of the catalytic medium that will typically be varied are the amount of hydrogen peroxide present, and the ratio of the amount of transition metal catalyst to the amount of hydrogen peroxide present. In some embodiments, the release profile of oxygen in the catalytic reaction medium is controlled by adjusting the ratio of transition metal catalyst to hydrogen peroxide.

In some embodiments, the catalytic medium is provided with a pH of between about 3.0 and 6.0 or any value therebetween, e.g. 3.5, 4.0, 4.5, 5.0 or 5.5, or any pH required for a particular application. In some embodiments, the pH is between about 4.5 and 5.0. In some embodiments, the pH is selected or empirically optimized based on the particular type of seed being used.

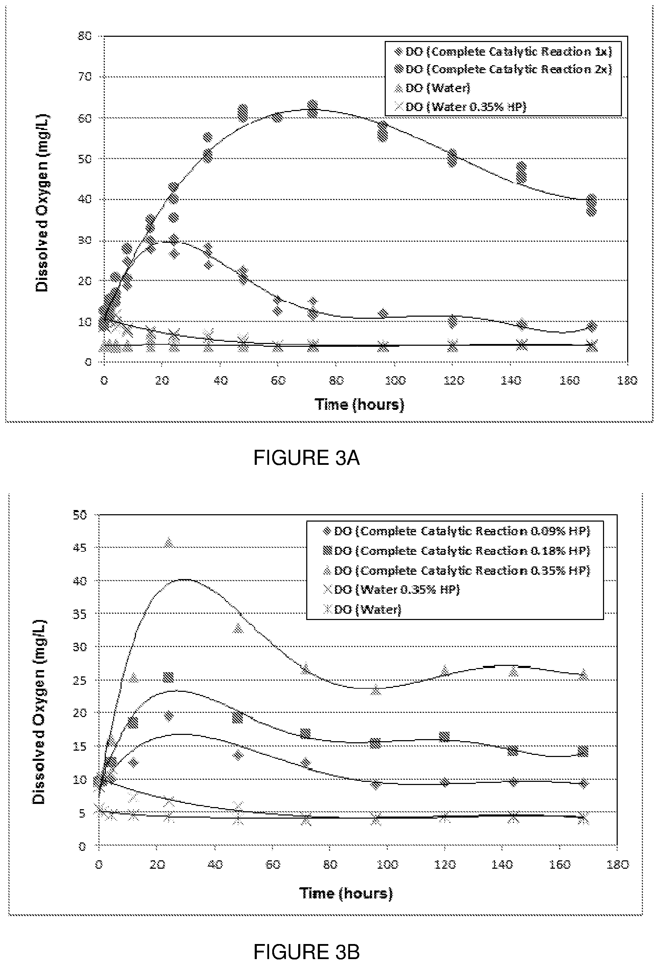

In some embodiments, the catalytic medium allows sustained and robust generation of oxygen (see for example Figures 3A-3C). In some embodiments, the level of dissolved oxygen released by the catalytic medium when added to water peaks in the range of 20 to 80 hours or any time therebetween, e.g. 25, 30, 35, 40, 45, 50, 55, 60, 65, 70 or 75 hours. In some embodiments, the level of dissolved oxygen in the aqueous medium containing the catalytic medium is sustained for between about 50 to 200 hours or any period of time therebetween, e.g. 60, 70, 80, 90, 100, 110, 120, 130, 140, 150, 160, 170, 180 or 190 hours. In some embodiments, the peak concentration of dissolved oxygen produced by the catalytic medium is in the range of about 15 to about 80 mg/L or any concentration therebetween, e.g. 20, 25, 30, 35, 40, 45, 50, 55, 60, 65, 70 or 75 mg/L.

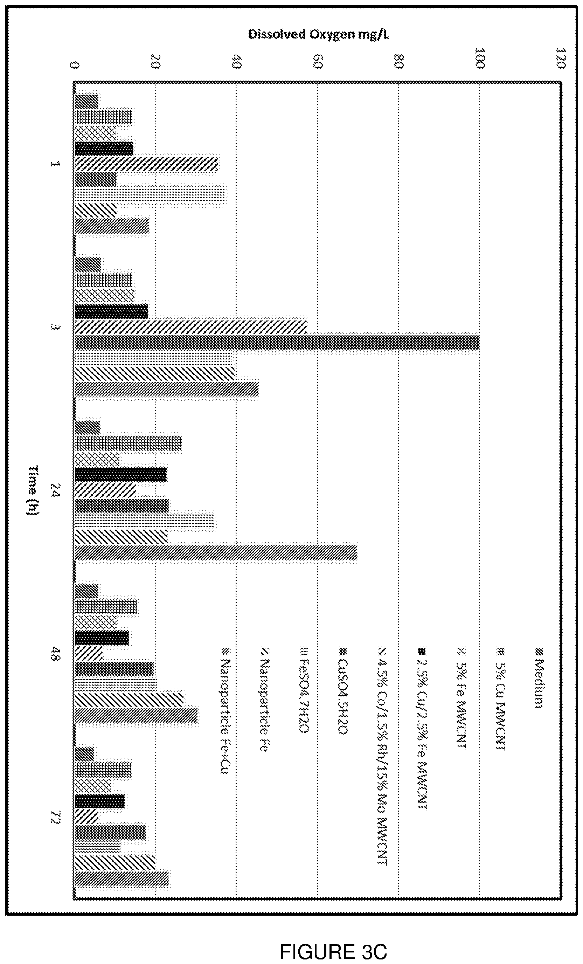

In some embodiments, the rate and/or level of dissolved oxygen produced by the catalytic medium is regulated to provide a desired net generation of oxygen and/or an oxygen release profile suitable for a particular application. For example, addition of more hydrogen peroxide can result in a higher level of dissolved oxygen being produced more quickly. Increasing the ratio of transition metal catalyst to hydrogen peroxide added can result in a more gradual increase in the level of dissolved oxygen over a longer period of time. The particular transition metal catalyst used can affect the release profile of dissolved oxygen. In some embodiments, iron-based nanoparticulates used as the transition metal catalyst provide a favourable oxygen release profile as compared with other transition metal catalysts. For example, in some embodiments, iron-based nanoparticulates provide a superior profile of oxygen generation over a long period of time as compared with other transition metal catalysts (see e.g. Figure 3C). In some embodiments, the temperature is adjusted to alter the net generation of oxygen and/or the oxygen release profile. In some embodiments, the pH is adjusted to alter the net generation of oxygen and/or the oxygen release profile.

In some embodiments, the seeds are treated with a catalytic reaction medium containing a transition metal catalyst and hydrogen peroxide in a closed system (i.e. in a system that is not exposed to the atmosphere). In such embodiments, higher concentrations of dissolved oxygen can be produced and maintained because the oxygen is not lost to the atmosphere.

Without being bound by theory, elevated, sustained oxygen levels are expected to aid the process of germination, as even very limited oxygen enrichment through provision of hydrogen peroxide has been demonstrated in the literature to improve germination of aged seeds.

According to the present invention, a method of enhancing germination of seeds comprises combining a transition metal catalyst that generates reactive oxygen species, an aqueous buffer and hydrogen peroxide in solution at an acidic pH and exposing the seeds to the solution for a period of between 30 minutes and 240 hours. In some embodiments, seeds are treated for a period of between 1 and 240 hours, or any period of time therebetween, e.g. 10, 20, 30, 40, 50, 75, 100, 125, 150, 175, 200, or 225 hours. In some embodiments, seeds are treated for a period of between about 30 minutes and 4 hours, or any period of time therebetween, e.g. 30 minutes, 45 minutes, 1 hour, 1 hour and 15 minutes, 1.5 hours, or 1 hour and 45 minutes, 2 hours, 2.5 hours, 3 hours, or 3.5 hours. In some embodiments, the seeds are treated for any suitable period required to result in enhanced germination of the seeds, wherein this period is of between 30 minutes and 240 hours.

In some embodiments, seeds are treated at a temperature in the range of 0°C to 50°C, or any temperature therebetween, e.g. 5°C, 10°C, 15°C, 20°C, 25°C, 30°C, 35°C, 40 °C or 45°C. In some embodiments, seeds are treated at a temperature of at least 10°C, including e.g. in the range of 10°C to 21°C, 22°C or 25°C. In some embodiments, the seeds are treated at any temperature that is required or optimized to achieve the desired enhancement or control of seed germination. In some embodiments, the seeds are treated at ambient temperature.

In some embodiments, the catalytic reaction capacity of a catalytic medium including a transition metal catalyst is controlled to reduce the risk of oxidative damage to the seed to a practically negligible level, if the desired outcome is seed germination stimulation. It is disclosed that the catalytic reaction can be allowed to proceed to the point where it generates metabolic injury to the seed, and effectively prevents subsequent seed germination, thereby allowing germination to be controlled.

In some embodiments, the factors that are manipulated to direct the catalytic reaction towards the desired outcome (enhancement of seed germination) are some or all of: (1) relative content of the transition metal catalyst, (2) relative content of the oxidizing agent (hydrogen peroxide), (3) buffering capacity and pH, (4) temperature, and (5) duration of exposure of seeds to the catalytic reaction. In some embodiments, the duration of exposure of the seeds to the catalytic reaction is controlled by washing the catalytic medium from the seeds using an aqueous solvent such as water after a desired period of time has passed. In some embodiments, the duration of exposure of the seeds to the catalytic reaction is controlled by planting the seeds after a desired period of time has passed. In some embodiments, the duration of exposure of the seeds to the catalytic reaction is controlled by draining the catalytic medium from the seeds and then planting the seeds or adding an aqueous solvent such as water to enable germination to proceed.

In some embodiments, the methods of the invention enhance seed germination by doing one or more of: hastening the emergence of radicles from the seeds; stimulating and/or increasing the rate and degree of rooting by seeds; stimulating and/or increasing shoot emergence and/or the emergence of leaves; and/or causing seeds to germinate within a more narrow span of time than untreated seeds (i.e. causing more uniform germination).

In some embodiments, the methods of the invention are used to disinfect seed prior to planting. The commercial use of treatments such as the application of fungicides is common to prevent destruction of growing plants. Some embodiments of the present invention provide an additional or alternative to the use of such treatments by killing fungus, bacteria or other microbes or pathogens that may be associated with the seeds before the seeds are planted. In some embodiments, the seeds and/or germinating substrate are exposed to a composition comprising a transition metal catalyst and an oxidant, namely hydrogen peroxide, for a suitable period of time, for example between 30 minutes and 4 hours, prior to germination to prevent microbial growth, e.g. of fungus or bacteria, on or near seeds during germination of seeds.

In some embodiments, the methods according to some embodiments of the invention are used to prevent microbial growth on or near seeds during germination. In some embodiments, a catalytic composition comprising a transition metal catalyst and an oxidant, for example hydrogen peroxide, is applied to seeds during germination to prevent microbial growth, for example of fungus or bacteria, on or near seeds during germination. In some embodiments, seeds are exposed to or primed with a catalytic composition comprising a transition metal catalyst and an oxidant to prevent microbial growth, for example of fungus or bacteria, on the seeds during subsequent germination.

In some embodiments, the methods of the invention are used to enhance the germination of cereal grains for malting. In some embodiments, the methods of the invention are used to enhance the germination of barley for malting. In some such embodiments, the transition metal catalyst is an iron-based nanoparticulate catalyst.

In some aspects of the disclosure a transition metal catalyst or a catalytic reaction medium containing the transition metal catalyst and hydrogen peroxide is used to coat seeds. A transition metal catalyst or a catalytic reaction medium is combined with a suitable carrier and used to coat seeds according to standard seed coating methodologies now known or later discovered. The suitable carrier is a gel. Preferably the gel is formed from cellulose, guar gum, carboxy methyl cellulose, or the like. A suitable form of cellulose for making such a coating may be produced, for example, in accordance with the methods described in WO 2013/000074. The gel can contain up to 95 to 97% of water, and could also be a moisture source during the critical period of root development. This could make the process of germination less dependent on environmental moisture, for example during drought.

In some aspects of the disclosure the seed coating is amended with other compounds, for example fungicides or herbicides (to protect seed from fungi or weeds) or nutrients and/or plant hormones (to stimulate and/or aid plant growth).

In some embodiments, the method of the invention is used to improve seed vigour. Improving seed vigour is an important factor in improving crop yield since it enables plants to establish early, grow quickly and take advantage of a short season. Seed vigour has traditionally been associated with seed size and seed age (with older seeds having lower vigour), and can encompass the viability of the seed, the germination percentage, germination rate, strength and biomass of the plants produced. Some embodiments of the present invention can enhance seed vigour in a range of seed qualities, thereby increasing yield potential of existing agronomic and horticulture field crops, improving establishment (including e.g. turfgrass establishment), and/or overcoming current variations in seed germination and emergence, including under a range of environmental constraints. Some embodiments of the present invention can enhance germination of aged or poorer quality seed.

In some embodiments, the method of the invention is used to facilitate more efficient utilization of the growing season by a crop. Facilitating more efficient utilization of a growing season by a crop means that crops which may not have traditionally been seeded in the field and grown in short season regions (such as the northern prairies of North America), may potentially be produced in such regions because the seeds can germinate more quickly and therefore mature in a shorter time, allowing such crops to reach maturity in regions having a short growing season. Examples of such crops include grain corn and soybeans grown in the Canadian prairie province of Saskatchewan.

The methods of the invention can potentially increase both root growth and shoot emergence under not only optimal, but also abiotic stress conditions such as high or low temperature, high or low levels of moisture, anaerobic stress and/or high or low salinity (including e.g. caused by drought, flooding, icing, or the like). In some embodiments, a carryover effect of seed treatment with a catalytic composition may be observed into the vegetative stages of plant growth, with accelerated growth and development. This can further shorten the length of the growing season required for a particular crop.

In some embodiments, the method of the invention is used to enhance germination of plant seeds under stressful conditions. In some embodiments, the stressful conditions comprise high or low temperature, high or low levels of moisture, anaerobic stress and/or high or low salinity (including e.g. caused by drought, flooding, icing, or the like), inadequate amounts of one or more nutrients, or the like. In some embodiments, the stressful conditions comprise a soil with high salinity. In some embodiments, the stressful conditions comprise a soil with a concentration of sodium chloride (NaCl) up to about 200 mM. In some embodiments, the solution comprising a transition metal catalyst and hydrogen peroxide is applied to seeds prior to or during germination under stressful conditions to enhance seed germination. In some embodiments, seeds are primed in the solution comprising a transition metal catalyst and hydrogen peroxide, dried, and then planted under the stressful conditions to enhance germination. In some embodiments, priming seeds for growth under stressful conditions is conducted as outlined below with respect to priming of seeds generally.

In some embodiments, the method of the invention is used to provide a greater utilization of photosynthetic capacity. By enhancing the germination of such crops by applying the method of the invention, the crops can achieve a higher degree of foliation within a shorter period of time. The timing of peak sun occurs with the summer solstice, typically around June 21 of each year in the northern hemisphere. By providing plants with a higher degree of foliation at or around the timing of peak sun, the plant has a higher photosynthetic capacity at the time of peak sun and can take greater advantage of the longer days.

In some embodiments, the method of the invention is used to prime seeds. In some embodiments, to prime seeds, seeds are soaked in the solution containing a transition metal catalyst and hydrogen peroxide for a suitable period of time. In some embodiments, the suitable period of time is between about 30 minutes and about 3 hours. Seeds are subsequently dried. In some embodiments, drying is carried out for a period of time sufficient to return the seeds back to their original (i.e. dry) seed weight. In some embodiments, drying is carried out for any suitable time period, e.g. about 5 days. Seeds are then allowed to germinate under suitable conditions after priming.

In some embodiments, the method of the invention enhances the growth of seedlings from those seeds. In some embodiments, exposing seeds to the composition comprising a transition metal catalyst and hydrogen peroxide, or priming seeds with the composition both enhances germination of those seeds and enhances the growth of seedlings from those seeds after germination.

In some embodiments, the method of the invention is used for high-value greenhouse vegetable crops or ornamental floral crops. Some types of horticultural seeds can be very difficult to germinate and are expensive to purchase. Thus, methods for enhancing the germination of horticultural seeds according to some embodiments of the present invention are desirable.

The ability to both control and subsequently enhance germination is important to seed storage in both horticulture crops (e.g. potatoes) as well as field crops.

Some embodiments of the present invention may have utility in breaking seed dormancy in seeds expressing a physical dormancy mechanism in the seed coat. In some such embodiments, a seed expressing a dormancy mechanism is exposed to the method of the invention for a suitable period of time to break seed dormancy.

In some embodiments, the method of the invention is used to select for stress resistant plants. In one such embodiment, plant seeds are exposed to a stressor (e.g. high or low temperature or humidity, salt stress, anaerobic stress, prolonged storage, or the like), and are then treated according to the method of the invention. After treatment, the seeds are planted, and those seeds that germinate and grow are selected as having an improved tolerance or resistance to that particular stressor. In such embodiments, exposure of the plants to the stressor could be at a first temperature, treatment of the seeds with the transition metal catalyst and hydrogen peroxide or catalytic medium containing same could be at a second temperature, and planting of the seeds could be at a third temperature. The first, second and third temperatures could be the same or different. In another such embodiment, plant seeds are first treated according to the method of the invention. The seeds are then planted under stressful conditions (e.g. inadequate moisture, inadequate levels of one or more nutrients, low light levels, high temperatures, cold temperatures, anaerobic stresses (e.g. caused by flooding and/or icing), freezing, excessive moisture, high salinity, low salinity or any other stress condition that it is desired to select tolerant plants for), and those plants that germinate and grow are selected as being tolerant to the stressful condition tested. In such embodiments, treatment of the plant seeds with the transition metal catalyst and hydrogen peroxide or catalytic medium containing same could be at a first temperature and planting of the seeds could be at a second temperature. The first and second temperatures could be the same or different.

### Examples

Some embodiments of the present invention are further described with reference to the following examples.

### Example 1 - Preparation of an Exemplary Iron-Based Nanoparticulate Catalyst

The starting material for the preparation of the iron catalyst used in the following examples is natural well water containing 10 ppm of iron having the composition set forth in Table 1. The water when freshly pumped from the well is crystal clear, but when exposed to air or oxidizing chemicals (e.g. chlorine based water disinfection products), it becomes murky due to oxidation of iron.

**Table 1. Composition of natural well water used to prepare iron-based nanoparticulate catalyst.**

| **Basic Livestock Suitability** | | | | |
|---|---|---|---|---|
| Iron (Fe)-Extractable | 10.1 | | 0.005 | mg/L |
| Chloride (Cl) | 7 | | 1 | mg/L |
| Nitrate | <1 | | 1 | mg/L |

| **pH and Conductivity** | | | | |
|---|---|---|---|---|
| TDS (Calculated from EC) | 1660 | | 1 | mg/L |
| pH | 7.2 | | 0.1 | pH |
| Conductivity (EC) | 2600 | | 0.2 | uS/cm |

| **ICP Cations and Hardness** | | | | |
|---|---|---|---|---|
| Calcium (Ca) | 357 | | 1 | mg/L |
| Potassium (K) | 12 | | 1 | mg/L |
| Magnesium (Mg) | 180 | | 1 | mg/L |
| Sodium (Na) | 79 | | 1 | mg/L |
| Sulfate (SO4) | 1190 | | 0.5 | mg/L |
| SAR | 0.9 | | 0.1 | SAR |
| Hardness (CaCO3 equivalent) | 1630 | | 1 | mg/L |

When reduced iron in well water in its native configuration is exposed to oxidising agents, as the process of oxidation progresses, oxidized iron eventually precipitates as very fine deposits. An abundance of particles in the 50 to 200 nm range is observed. Based on X-ray diffraction analyses, it appears that the vast majority of the nanoparticle is calcite (CaCO₃), and iron forms a thin coating on the calcite/clay core. Most of the iron is in the Fe³⁺ valence by the time the nanoparticles are observed.

### Example 2 - Preparation of an Exemplary Iron-Based Nanoparticulate Catalyst

To rapidly and efficiently precipitate iron nano-particles from the well water of Example 1, commercial 12% chlorine-based commercial disinfection product is added to well water at a rate of 1 mL per litre. The mixture is agitated very vigorously, and a very fine suspension of iron particles forms immediately. The formation of this initial suspension marks the commencement of the nucleation process of the nano-particles. This preparation is allowed to mature undisturbed to complete the nucleation of nano-particles (usually in the range of 60 minutes).

Following the completion of nucleation process, very fine dark red/brownish particles start to precipitate on the bottom of the container under gravity. Typically after 2 to 3 hours, the catalyst enriched bottom layer can be harvested. The harvested sediment is filtered through fine stainless steel mesh filter, and washed several times in water purified by reverse osmosis until residual chlorine is removed. In embodiments in which the iron-based nanoparticulate catalyst is to be used in seed conditioning procedures, the resulting preparation is preferably essentially free of residual chlorine.

The resultant iron nano-catalyst product readily separates from water under gravity, forming a clear layer of water on top, and dark red/brownish sediment comprising iron nano-particles on the bottom (Figure 2).

### Example 3 - Selection of Buffer for Catalytic Medium

An initial study comprised several screening trials where an iron-based nanoparticulate catalyst according to one example embodiment was examined in the context of catalytic milieu. The goal of this study was to determine favourable conditions of pH, buffering system, and ionic composition and strength for the controlled treatment of seeds. Several mineral and organic acids in various permutations were initially tested. Based on the initial results, the polyvalent carboxylic acids aconitate and citrate in various combinations were further tested. Both acids performed well for the intended purpose. A citrate-based catalytic system was selected for further study because of its robust performance, biological compatibility (citrate is a natural compound that is a part of many metabolic pathways), and relatively low cost.

It has been found that citrate-Fe(II)-dioxygen-citrate Fe(III) are very potent catalysts that are not inhibited either by catalase or superoxide dismutase (SOD). These aspects of the presently described catalytic reaction mimic defence responses of many plant species to pathogen attack (Shirasu, Kl, Nakajima, H., Rajasekhar, V.K., Dixon, R.A., & Lamb, C. (1997). Salicylic Acid Potentiates an Agonist-Dependent Gain Control That Amplifies Pathogen Signals in the Activation of Defense Mechanisms. The Plant Cell: 9, 261-270).

### Example 4 - Preparation of Catalytic Medium for Seed Germination Experiments

In these examples, for bench testing of the effects of the catalytic medium on seed germination, the system is prepared in distilled water. First, 100 ml of water is buffered with a stock of generic buffer based on citrate to obtain pH approximately between 4.5 and 5.0. The concentration of citrate can be varied based on the buffering demand of a particular seed's ligno-cellulosic matrix, but is typically in the range of about 5 to 100 mM. In the present example, the concentration of citrate in the buffer was determined by titration into the water to yield the desired pH. Following this, 1 mL of an iron-based nanoparticulate catalyst prepared as described above (estimated to be at a concentration of between 5 and 100 mM, and prepared by adding water above the surface of the precipitated iron-based nanoparticulate catalyst until a 1:1 ratio of water to precipitated catalyst is reached, then swirling the solution to bring the iron-based nanoparticulate catalyst into solution prior to removal of 1 mL of such solution), and then hydrogen peroxide (from 35% stock) is added in an amount based on experimental objectives, for example between 0.2 mL and 1 mL to yield a final concentration of about 1 to 20 ppm of the iron-based nanoparticulate catalyst and about 0.1% to 0.5% hydrogen peroxide in the catalytic medium. Further buffer can be added, if necessary, to ensure the pH remains within the desired range. The relative Oxidation-Reduction Potential (ORP) of the catalytic system is monitored and used to determine the amount of hydrogen peroxide required for the reaction system to achieve a suitable redox potential, which depending on experimental objectives may be between 50 mV to 100 mV or higher relative to the water used for the reaction. In some embodiments, the amount of oxidant to be added may vary depending on the redox change potential of the particular seeds being used.

In further examples, the catalytic reaction medium was tested extensively with various permutations of the catalysts being tested. As a bench mark parameter for robustness of the catalytic reaction medium, the inventors adopted measurement of dissolved oxygen (Figures 3A-3C).

### Example 5 - Dissolved Oxygen Release by Iron-Based Nanoparticulate-Containing Catalytic Medium

The catalytic medium prepared as described above was shown to be capable of generating high levels of dissolved oxygen (DO). In comparison to water containing 0.35% of hydrogen peroxide (HP), a robust net gain of dissolved oxygen levels is observed in water containing a catalytic composition according to two example embodiments (Figure 3A). Data showing dissolved oxygen levels in water provide a bench mark for the basal level that would be expected when catalytic medium dissolved oxygen is fully equilibrated with atmospheric oxygen.

In this example, two different concentrations of transition metal catalyst were tested. The second test solution (circles) contained twice as much transition metal catalyst as the first solution (diamonds). Both solutions contained 0.35% hydrogen peroxide. For the first solution, the dissolved oxygen level peaked at a concentration of approximately 30 mg/L approximately between 24 and 35 hours, but sustained generation of high levels of dissolved oxygen was evident for 72 hours. For the second solution, net generation of oxygen in the catalytic reaction peaked at a level 60 to 70 mg/L approximately between 60 and 80 hours, and sustained generation of high levels of dissolved oxygen was evident for approximately 170 hours. In contrast, dissolved oxygen in the control systems containing only 0.35% hydrogen peroxide in water was much lower and decreased rapidly, reaching basal levels after about 60 to 70 hours. This example shows that the net generation of oxygen in the catalytic reaction can be adjusted as may be required for any specific application. In this example, increasing the concentration of transition metal catalyst present in solution both increased the peak level of dissolved oxygen achieved, and resulted in a more gradual release profile of dissolved oxygen.

In another trial (results shown in Figure 3B), the effect of the concentration of hydrogen peroxide in the catalytic reaction medium was examined. The concentration of transition metal catalyst in each of the three test solutions was the same. Again, dissolved oxygen in a control system containing only 0.35% hydrogen peroxide in water was much lower and decreased rapidly, reaching basal levels after about 70 to 80 hours (X symbol). A first test solution containing a transition metal catalyst in citrate buffer with 0.09% hydrogen peroxide (diamonds) produced a peak level of dissolved oxygen concentration of between about 15 and about 20 mg/L after approximately 20 to 30 hours. A second test solution containing 0.18% hydrogen peroxide (squares) produced a peak level of dissolved oxygen concentration of between about 20 and 25 mg/L after approximately 20 to 30 hours. A third test solution containing 0.35% hydrogen peroxide (triangles) produced a peak level of dissolved oxygen concentration of approximately 40 mg/L after approximately 30 to 40 hours. For all three solutions, high levels of dissolved oxygen were sustained for over 160 hours. Thus, this example demonstrates that increasing the concentration of hydrogen peroxide present in the reaction solution increases the peak level of dissolved oxygen that can be produced.

Other transition metal catalysts similarly resulted in robust generation of dissolved oxygen in a reaction system of citrate-buffered water (pH 3.8) and 0.35% hydrogen peroxide. 10 mg each of carbon nanotube-supported transition metal catalyst or transition metal salt were combined in citrate-buffered water at pH 3.8 with 0.35% v/v hydrogen peroxide and the production of dissolved oxygen in the reaction system was measured (note that the resultant content of the transition metal catalysts is not on an equimolar basis). As shown in Figure 3C, transition metal salts (CuSO₄ and FeSO₄) or multi-walled carbon nano tubes impregnated with Fe, Cu, Cu and Fe, or Co and Rh and Mo catalysed the production of oxygen in the reaction medium.

The inventors have found that net generation of oxygen by the catalytic medium can be adjusted as may be required for any specific application. The key factors that can be adjusted include the relative content of the transition metal catalyst, and the relative content of the oxidizing agent (here, hydrogen peroxide). Increasing the ratio of transition metal catalyst to hydrogen peroxide yields a more gradual release profile, whereas adding more hydrogen peroxide results in a faster oxygen release with a higher peak level of dissolved oxygen.

Without being bound by theory, elevated, sustained oxygen levels would be expected to aid the process of germination when seeds coated with a composition comprising the transition metal catalyst and hydrogen peroxide are exposed to water, as even very limited oxygen enrichment through provision of hydrogen peroxide has been demonstrated in the literature to improve germination of aged seeds.

Further without being bound by theory, while transition metal catalysts were evaluated having regard to the production of dissolved oxygen, the formation of radicals accompanying the reaction process is also important to enhancing seed germination. Such radicals are difficult to observe and so the level of dissolved oxygen produced was used as an observable indicator that the reactions are proceeding. Based on the inventors' previous experience with biomass treatment, the level of dissolved oxygen produced is an accurate indicator of the reaction kinetics including formation of radicals.

### Example 6 - Enhancement of Barley Seed Germination

Several preliminary germination experiments using barley seeds were conducted using a standard protocol for a seed germination study. Briefly: seeds are planted in plastic trays lined with paper towels. One tray is saturated with tap water (control) and the other is saturated with water containing a catalytic medium according to an example embodiment (treatment). In this example, a catalytic reaction medium containing an iron-based nanoparticulate catalyst prepared as described for Example 4 was used for the treatment group, with the final concentration of hydrogen peroxide varied between 0.15 and 0.35% v/v. The trays are then placed in a transparent plastic container (mimicking standard greenhouse conditions), and incubated in an illuminated fume hood at room temperature. The trays are examined periodically to assess root development and the process of germination.

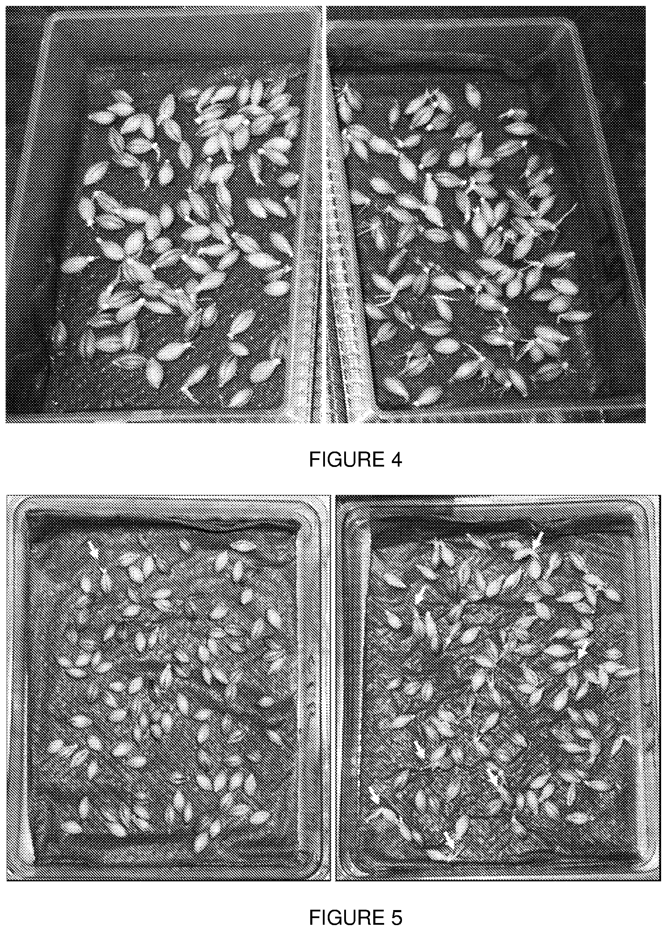

In five of six experiments, treatment with the catalytic medium prepared as described above (as compared to water alone) appeared to enhance seed germination in several ways, including faster emergence of radicles and faster rooting by seeds. The results of one such experiment after 30 hours of incubation are shown in Figure 4. Almost all seeds cultured on catalytic medium incorporating an iron-based nanoparticulate catalyst and hydrogen peroxide showed emergence of radicles, and the majority started rooting, whereas significantly fewer seeds cultured on water medium showed emergence of radicles, and only some started rooting after 30 hours of incubation. Results of a second such experiment after 18 hours of incubation are shown in Figure 5, in which rooting is indicated by white arrows. Again, the vast majority of seeds cultured on catalytic medium (right tray) showed emergence of the radicle, and many started rooting (examples indicated by white arrows) by the 18 hour time point, whereas only a few seeds cultured on water medium (left tray) showed emergence of the radicle, and only one started rooting (arrow). The effects described in Figures 4 and 5 were reproduced four additional times using barley seeds as a model.

Generally speaking in this example, the catalytic media appeared to hasten emergence of radicles, and to stimulate rooting, which was evidenced on trays seeded on catalytic medium by clear development of radicles and roots several hours earlier in comparison to controls. Furthermore, almost all the seeds cultured on catalytic medium germinated within a very narrow time frame which was in contrast to the control seeds.

In one of the tested embodiments having citrate-buffered medium at pH 4.5 containing 1 mL of the iron-based nanoparticulate catalyst and 0.35% hydrogen peroxide with steeping for 24 hours at room temperature, the treatment resulted in sterility of the seeds. Thus, exposure to a transition metal catalyst and hydrogen peroxide at high concentrations can be used to control germination of seeds.

### Example 7 - Enhancement of Shoot Emergence

Treatment with catalytic medium prepared as described above also enhanced shoot emergence and leaf development from barley seeds as compared with buffer alone. Figure 6 shows the results of one such experiment. The top panel of Figure 6 shows an image of the seeds at the time of planting. The bottom panel of Figure 6 shows the same cultures after seven days of incubation. The left hand side of the image is a control culture of approximately 100 barley seeds planted on medium saturated with tap water buffered with citrate to pH 4.9. The right hand side of the image is a treated culture of approximately 100 barley seeds planted on medium saturated with catalytic medium according to an example embodiment of the invention buffered with citrate to pH 4.9. Leaf development was considerably more advanced after seven days in the sample treated with catalytic medium.

Table 2 shows quantitatively the effect of treatment with a catalytic medium according to an example embodiment on radicle emergence and shoot emergence from barley seeds. A sample of 5 grams, or approximately 100 barley seeds was planted respectively on either a plastic tray containing medium saturated with tap water buffered with citrate to pH 4.9 (Control), or a plastic tray containing medium saturated with complete catalytic medium according to an example embodiment buffered with citrate to pH 4.9 (Treatment). The cultures were then incubated under simulated greenhouse conditions at room temperature, and periodically inspected for radicle emergence and shoots emergence. At both 16- and 96-hour time points, the treated samples exhibited a significantly higher degree of both radicle emergence and shoot emergence.

**Table 2. Effects of catalytic treatment on radicle emergence and shoot emergence from barley seeds.**

| | **Control** | **Treated** |
|---|---|---|
| Culture 16 hours Radicle Emergence Count | 28 | 90 |
| Culture 96 hours Shoot Emergence Count | 63 | 78 |

Further experiments showed that the catalytic media, depending on the strength of the media (e.g. if the catalytic media is too strong), may have also detrimental effects on germination (including total halt of germination process). Thus, under appropriate conditions, some embodiments of the catalytic compositions of the present invention can be used not only for seed stimulation, but also or alternatively for seed sterilization (for example to prevent industrial seed sprouting during storage in humid environment).

The foregoing examples establish that catalytic compositions in accordance with some embodiments of the present invention can be used to enhance and/or regulate germination of barley seeds. It can be soundly predicted based on this example that such compositions can be used to enhance germination of other types of seeds including without limitation grains, oilseeds, legumes, pulses, horticulture crops, vegetable crops, forestry species and forage crops because the biochemical mechanisms of seed germination are highly similar across plant species.

### Example 8 - Putative Mechanism of Enhancement of Barley Seed Germination

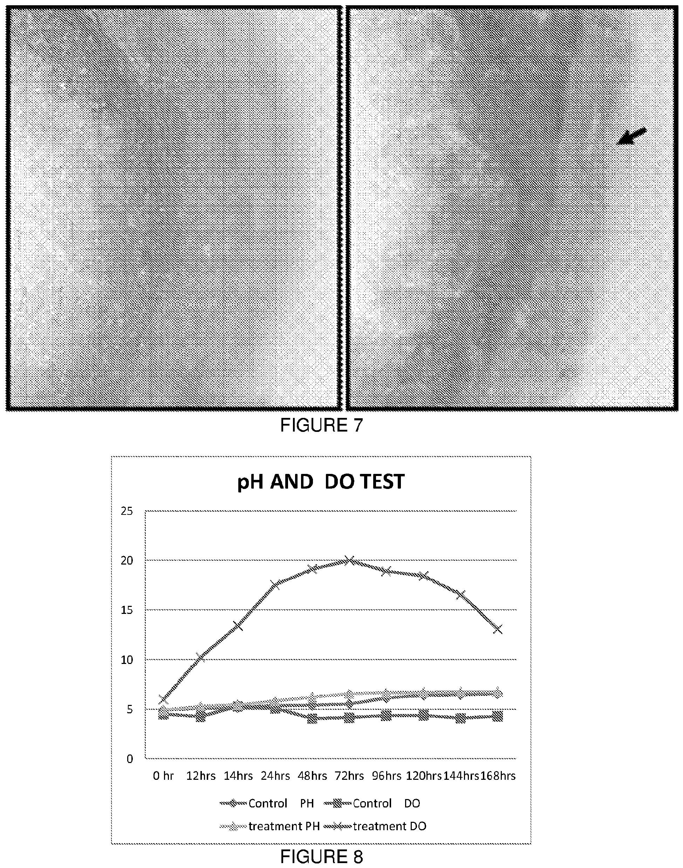

Without being bound by theory, it is believed that the key steps of seed conditioning which result in the observed enhancement of germination are as follows: (1) the catalytic reaction acts on ligno-cellulosic material present in the seed coat, and depolymerizes molecules such as lignin, hemicellulose, cellulose, and other complex molecules, and (2) the process of depolymerisation softens the seed coat, and naturally allows better penetration of moisture to the seed, which hastens germination. Preliminary evaluation of microscopic images obtained from untreated and treated barley seeds supports this hypothesis, as the catalytic process exposes slight etching on the outer layer of the treated seed (Figure 7). In the images of Figure 7, both seeds were exposed to either water (left panel) or catalytic medium containing an iron-based nanoparticulate catalyst (right panel) for 12 hours. A slight indentation is observable on the outer layer of the treated seed (indicated by black arrow in right hand panel). Without being bound by theory, in addition to the softening effect of the depolymerisation, as outlined previously, the reactive oxygen species generated in the process may also mimic endogenous reactive oxygen species-signaling, thereby stimulating the germination process. Further without being bound by theory, the demonstrated increased oxygen levels induced by catalytic treatment may also enable metabolic processes to occur at a higher rate, speeding up germination, plant growth and development.

### Example 9 - Optimization of Conditions and Protocol for Further Experiments

A general protocol for testing seed germination in further species and cultivars based on that developed for malting barley and used for all subsequent examples is described below. The reaction concentrations chosen were based on best estimate, but were not tested over a range of concentrations for further optimization. Various seed types may also require different imbibition times for optimized results, but such optimization was not carried out in these experiments. It is anticipated that improved results could be obtained with appropriate optimization and one skilled in the art is expected to be able to perform such optimization. Experiments indicated that time-wise one hour seed imbibition of the solution (0.5% by volume of H₂O₂ (v/v), 0.5% by volume of the iron transition metal catalyst solution (v/v) and pH'd to 4.9 with citrate) gave well-differentiated germination responses between control and treatments. Additional hours of seed imbibition in malting barley were found to be unnecessary in these preliminary experiments. Shorter periods of seed imbibition may also be effective for other seed types.

It was determined that the volume of solution for germination should be at a level to fully saturate the filter paper (standing visible moisture, VM) but without a moisture deficit (filter paper saturated but no visible moisture, NVM). In the case of barley in this system, marked germination was observed as early as 12 hrs at 23°C. Seed germination of other crops spanned days depending upon the germination temperature. Dissolved oxygen peaked in treatment solution around 3 days (5 times control levels) but continued at higher detectable levels past one week (3 times control levels) and was observed to continue for several weeks in other experiments. Without being bound by theory, this extended elevated oxygen level (Soffer and Burger, 1988, J. Amer. Soc. Hort. Sci. 113(2): 213-221) and ROS (Foreman et al., 2003, Nature 422:442-446) has potential to positively impact root growth and subsequently shoot growth of developing plants. pH of both control and treatment solutions were similar, rising from 4.92 at 0 days to an average of 6.66 by 7 days. Gas production was induced by the treatment in some crops. These same crops also appeared to germinate at a faster rate under treatment.

Agronomic cultivars tested include grain crop malting barley *Hordeum vulgare* 'Meredith' and 'Copeland'; pulse crops chickpeas *Cicer arietinum* 'CDC CORY', 'Consul', 'Leader' and beans *Phaseolus vulgaris* 'Sol' and 'WM-2'; legume crop soybeans *Glycine max* 'TH33003R2Y' and 'Pool T34R'; pulse crop lentils *Lens culinaris* 'Greenland' 2004 and 2006 seedlots, 'Makim' 2004 seedlot). Forage seed species and cultivars tested include Cicer milkvetch (*Astragalus cicer* 'Oxley'). Horticulture seeds tested include corn (*Zea mays* 'Extra Early Supersweet'); onion (*Allium sativum* 'Early Yellow globe'); cucumber (*Cucumis sativus* 'Pioneer F1 Hybrid'); green beans (*Phaseolus vulgaris* 'Improved Golden Wax'); and sweet pea flowers (*Lathyrus odoratus* 'Bijou Mix'). Grain cultivars tested include spring wheat 'CDC Utmost'. It is noted that pulse crops are also considered to be legumes, although not all legume crops are considered to be pulse crops (e.g. chickpeas and lentils are considered to be pulse crops and legumes, while soybeans are considered to be legumes but not pulse crops).

Variation in seed quality and size necessitated prior seed sorting into uniform sizes for all crops and cultivars before each of the experiments in these examples. All of the solutions for all of the experiments were formulated as follows:
Control buffer: in 100ml Deionized water, add one drop of citrate to generate a pH 4.9.
Treatment: in 100ml Deionized water, add 0.5ml of Hydrogen peroxide (35%), 0.5ml iron-based nanoparticulate catalyst 1:1 suspension, and one drop of citrate to generate a pH 4.9.

All germination experiments were conducted in the dark either in the lab at 23°C, phytotron growth chambers (constant 15°C) or in Sanyo Versatile Environmental Chamber MLR-350H, Sanyo Scientific, USA (constant 10°C). Only the middle three shelves of each incubator, 15cm apart, were used for the germination test to minimize the temperature difference among shelves within each incubator. Similarly, the middle of the phytotron chamber (PGR8) was used for the 15°C germination tests. Most experiments were conducted two times with some tests conducted five separate times.

Three layers of 9.0 cm filter paper (Fisher Scientific Toronto ON, Porosity: medium, Flow Rate: slow, Catalogue # 09-801B) were placed into 9.0 cm plastic petri plates (Fisher Scientific Toronto ON) with lids. Seeds were sorted and counted into the petri plates in preparation for the test. The following day, between 5 - 8 ml of each of the control buffer and treatment were freshly made and immediately added to their respective petri dishes with seeds. Seeds were allowed to imbibe the control buffer and treatment for various lengths of time (Experiment 1; one, two and four hours at 22°C) in the light (ca. 40 µmolm⁻²s⁻¹). One hour of imbibition was then selected for all subsequent seed treatments. After one hour, control buffer and treatment solutions were drained leaving filter paper saturated with visible standing moisture (VM). Petri dishes with soaked filter paper and seeds were then placed into large sealed plastic bags to reduce evaporative loss. Control buffer and treatment solutions were added as necessary. Petri dishes were placed in the dark in their respective germination treatments (temperatures (10, 15, 23°C as above) or time course (6, 12, 14, 16, 18, 24, 48, 72, 96, etc. hrs)), or priming or planted for seedling growth. Germination was defined and counted when the radicle was just visible and had broken through the seed coat. Germinated seeds and rotten seeds were removed after each counting.

Growth tests under constant 10, 15 and 20°C were conducted using 10 cm square pots, Sunshine #4 soilless mix (SunGro Horticulture Products, Canada) under ca. 150 µM/m²/s and a 12 hr photoperiod. Growth rate of seedlings under these temperature conditions were assessed through non-destructive height measurements at 3 day intervals after emergence for a period of 15 days. Stress tests represented the germination and growth under sub-optimal temperatures. Large scale agronomic crops such as corn and soybean were included in the treatment application and evaluated for synchrony, and rate of germination.

An initial experiment was conducted to assess the effect of soaking seeds in catalytic treatment solution for various periods of time. Malting barley seeds were soaked (completely immersed) in control and treatment solutions at 23°C for 1, 2 and 4 hours. Percentage germination was subsequently evaluated at 18, 24 and 48 hrs under dark conditions after draining the solution and keeping the filter paper moist (visible moisture, VM) with the respective solutions. There was no apparent advantage to soaking seeds for 4 hours compared to 1 hour in treatment. Although treated soaked seeds had higher germination rates than control seeds across all soaking times, this difference diminished with increasing hours of soaking. Results are shown in Table 3.

**Table 3. Effect of different imbibition periods on barley seed germination.**

| **Barley cultivar** | **Hours of soaking** | | **Hours of Germination** | | |
|---|---|---|---|---|---|
| | | | **18 hrs** | **24 hrs** | **48 hrs** |
| | | | **% Germination** | | |
| **'Meredith'** | **1 hr** | **Control** | **45** | **91** | **92** |
| | | **Treatment** | **80** | **97** | **97** |
| | **2hrs** | **Control** | **61** | **88** | **91** |
| | | **Treatment** | **74** | **89** | **92** |
| | **4hrs** | **Control** | **77** | **91** | **94** |
| | | **Treatment** | **82** | **92** | **93** |
| **'Copeland'** | **1 hr** | **Control** | **56** | **88** | **91** |
| | | **Treatment** | **84** | **97** | **99** |
| | **2hrs** | **Control** | **63** | **86** | **91** |
| | | **Treatment** | **76** | **92** | **95** |
| | **4hrs** | **Control** | **75** | **89** | **93** |
| | | **Treatment** | **91** | **95** | **96** |
| | | | | | |

Another experiment was conducted with barley seeds to determine what volume of catalytic treatment solution should be applied during the germination period. Seeds were soaked in control buffer and treatment solution for 1 hr at 23°C and then drained. Fifty seeds per petri dish, 5 petri dishes per treatment per cultivar were evaluated. Time course examined % germination at 12, 14, 16 and 18 hrs. Volume of catalytic treatment solution used during the germination test compared saturated-drained filter paper with visible moisture VM (6-12 ml - increasing volume with increasing seed size), and 4 ml treatment solution in which the filter paper was saturated but no visible moisture NVM. Four ml is the standard volume for malting barley germination tests, as per the American Society for Brewing Chemists (Methods of Analysis. 10th ed. Chicago, IL, 2009.). On the saturated filter paper, germination was already initiated at 12 hrs at 23°C while germination was delayed on the 4 ml volume no visible moisture (NVM) treatment. Results are shown in Table 4.

**Table 4. Effect of germination solution volume on rate of germination in 'Meredith' and 'Copeland' malting barley cultivars.**

| **Barley cultivar** | **Germination Solution Volume (ml)** | | **Hours of Germination** | | | |
|---|---|---|---|---|---|---|
| | | | **12 hrs** | **14 hrs** | **16 hrs** | **18 hrs** |
| | | | **% Germination** | | | |
| **'Meredith'** | **4 ml** | **Control** | **0.0** | **6.5** | **11.0** | **27.5** |
| | | **Treatment** | **0.0** | **3.0** | **6.0** | **18.5** |
| | **10 ml** | **Control** | **12.0** | **39.0** | **60.0** | **85.0** |
| | | **Treatment** | **36.0** | **64.0** | **82.0** | **94.0** |
| **'Copeland'** | **4 ml** | **Control** | **0.0** | **5.0** | **6.5** | **20.0** |
| | | **Treatment** | **0.0** | **2.0** | **2.5** | **7.5** |
| | **10 ml** | **Control** | **15.0** | **42.0** | **58.0** | **85.0** |
| | | **Treatment** | **38.0** | **65.0** | **80.0** | **92.0** |

In the above experiment (results shown in Table 4), the 10 ml volume treatments showed germination prior to the 12 hour point, and therefore the time range for observation was expanded for the following experiment to further monitor the time course of barley seed germination at 23°C. The minimum time for seed germination was evaluated at 23°C using two different volumes of seed germination solution. Fifty seeds per petri dish, 5 petri dishes per treatment per cultivar were examined. Time course examined germination from 6, 12, 24, 36, 48 hrs under the two volume levels of catalytic treatment germination solution used in the experiment described above. Germination initiated sometime between 6 - 12 hours on the 8-12 ml germination volume solution (VM) but not on the 4 ml germination volume solution (NVM), which required an additional 12 hrs to germinate to the same level. Results are shown in Table 5. Based on these experiments, the visible moisture (VM) level of moisture on the petri plates was selected for further experiments.

**Table 5. Effect of soaking solution volume 4 ml which saturated the filter paper but with no visible moisture (NVM) or 10 ml which saturated the filter paper with visible moisture (VM) on full time course profile of barley seed germination.**

| **Barley cultivar** | **Germination Solution Volume (ml)** | | **Hours of Germination** | | | | |
|---|---|---|---|---|---|---|---|
| | | | **6 hrs** | **12 hrs** | **24 hrs** | **36 hrs** | **48 hrs** |
| | | | **% Germination** | | | | |
| **'Meredith'** | **4 ml (NVM)** | **Control** | **0.0** | **0.0** | **22.0** | **82.0** | **100** |
| | | **Treatment** | **0.0** | **0.0** | **20.0** | **75.0** | **98.0** |
| | **10 ml (VM)** | **Control** | **0.0** | **12.0** | **76.0** | **88.0** | **88.0** |
| | | **Treatment** | **0.0** | **25.0** | **90.0** | **94.0** | **95.0** |
| **'Copeland'** | **4 ml (NVM)** | **Control** | **0.0** | **0.0** | **16.0** | **55.0** | **96.0** |
| | | **Treatment** | **0.0** | **0.0** | **20.0** | **60.0** | **96.0** |
| | **10 ml (VM)** | **Control** | **0.0** | **5.0** | **78.0** | **88.0** | **90.0** |
| | | **Treatment** | **0.0** | **20.0** | **91.0** | **94.0** | **95.0** |

A further experiment was conducted to confirm the pH and level of dissolved oxygen in control versus catalytic treatment solutions over time. To determine the level of oxygen and pH in the control and treatment solutions over the time course of the experiment, these responses were measured from 1 to 168 hrs (7 days) at 23°C. pH of both control and treatment steadily increased over this period from 4.91 to 6.55 (control buffer) and 4.92 to 6.77 (treatment solution). Dissolved oxygen of control solution remains relatively constant at an average of 4.5 mg/L. Dissolved oxygen of treatment solution increased to approximately four times initial levels, peaking around 3 days and slowly declining thereafter. Even after 7 days, treatment DO levels were more than double the initial quantity. This experiment was performed four times. Results of one representative experiment are shown in Figure 8.

The production of bubbles was observed in certain crops after treatment with the catalytic solution. The nature of the gas is not known but is expected to be oxygen. Seeds which produced bubbles upon treatment with catalytic solution include soybeans *Glycine max* 'TH33003R2Y' and 'Pool T34R'. Bubbles were also produced upon catalytic treatment of corn seed (*Zea mays* 'Extra Early Supersweet') treated with fungicide which was most likely Captan (broad spectrum contact fungicide, active ingredient N-trichtoromethylthio-cyclohexene-1,2-dicarboximide).

### Example 10 - Enhancement and Synchronization of Barley Seed Germination

Experiments were conducted to assess the effect of catalytic treatment on synchronization and enhancement of germination in two popular malting barley cultivars 'Meredith' and 'Copeland' under constant 22, 15, 10°C. According to the Canadian Grain Commission (Langrell DE, Edney MJ, Izydorzcyk MS (2008) Quality of Western Canadian malting barley. Canadian Grain Commission. ISSN 1182-4417.), malting barley quality is assessed through a standard germination test conducted at 20°C on Whatman No. 9 filter paper in petri plates. Germination is evaluated at 24, 48 and 72 hours (final count). In order to make beer, malting barley seed is normally first soaked in water for 48 hrs (process called "steeping") and then germinated in the dark at 15 - 18°C for five days (producing "green malt"). The germination process is then halted through drying. Synchronization and speed of germination during the green malt stage are both important aspects for the malting quality and process.

Germination time courses were performed twice and germination evaluated every two hours for varying lengths of time depending on the germination temperature. Then, a time point was selected representing the earliest time of germination with marked differences in germination. Six replications were subsequently performed at that time point under the same treatment concentration and 1 hr incubation.

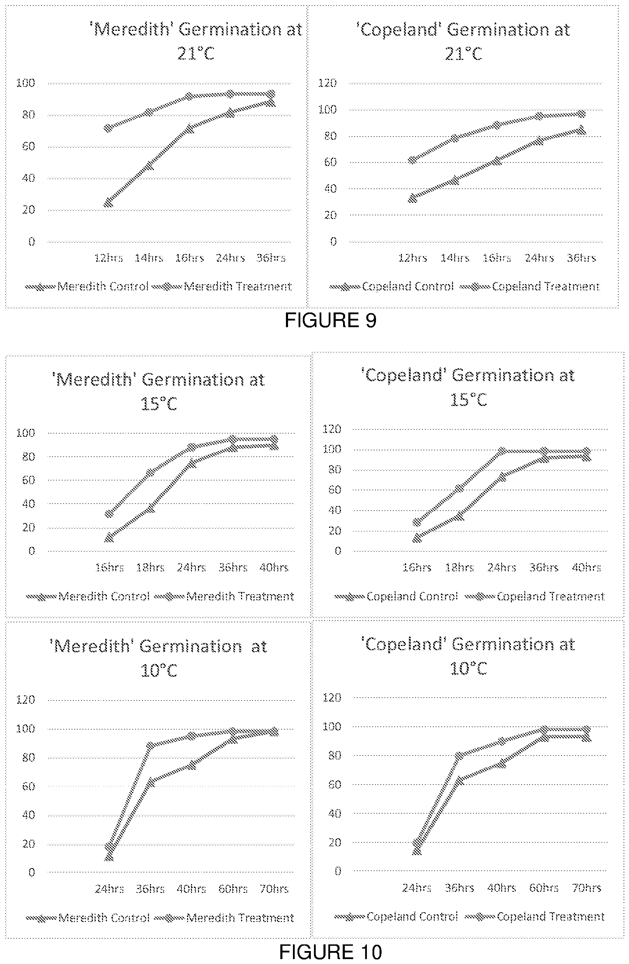

Treatment increased both germination synchrony and rate under 22°C as early as 12 hrs for 'Meredith' and 'Copeland' malting barley (Figure 9, mean of 2 experiments). One time point was subsequently selected based on the earliest time point which best separated the control and treatment response. Six replications for each of control and treatment was performed. At 12 hrs, treatment resulted in a germination percentage of 90% compared to 38% in control seeds of 'Copeland'. Similarly, treatment increased 'Meredith' % germination at 12 hrs to 75% compared with control seeds (40% germination) (average of six replicates).

Treatment enhancement in germination was also observed at lower temperatures (15 and 10°C) in 'Meredith' and in 'Copeland' in these experiments (results shown in Figure 10).

Based on the foregoing results demonstrating enhancement of germination rate and synchrony with exemplary barley cultivars, it can be soundly predicted that treatment of barley and other seeds with catalytic compositions according to some embodiments of the invention, including grain seeds, can be used to enhance the germination rate and synchrony of seeds. Enhancing synchrony of germination of barley seeds is of particular interest to the malting industry.

### Example 11 - Enhancing Germination of Legume and Pulse Crops By Treatment with Catalytic Medium

The following pulse crops/grain legumes were assessed: chickpeas *Cicer arietinum* 'CDC CORY', 'Consul', 'Leader'; beans *Phaseolus vulgaris* 'Sol' and 'WM-2'; soybeans *Glycine max* 'TH33003R2Y' and 'Pool T34R'; and lentils *Lens culinaris* 'Greenland' 2004 and 2006 seedlots, 'Maxim' 2004 seedlot to determine treatment effect on synchronization and advancing germination in legume/pulse crops under constant 22, 15, and 10°C.

Experiments were conducted as outlined above in Example 9, except that seeds were allowed to imbibe the control buffer and treatment for 2 hrs at 22°C in the light (ca. 40 µmolm⁻²s⁻¹). Petri dishes were placed in the dark in their respective germination treatments (temperatures (10, 15, 22°C as above) for the time course. Germination time courses were performed twice (line graphs) and germination evaluated as above depending on the germination temperature. Then, a single time point was selected representing the earliest time of germination with marked differences in germination. Six replications (20 seeds per petri dish) were subsequently performed at that time point under the same treatment concentration and 1 hr incubation and subsequent % germination evaluation under dark conditions. A summary of the increase in germination observed for each cultivar at a selected time point

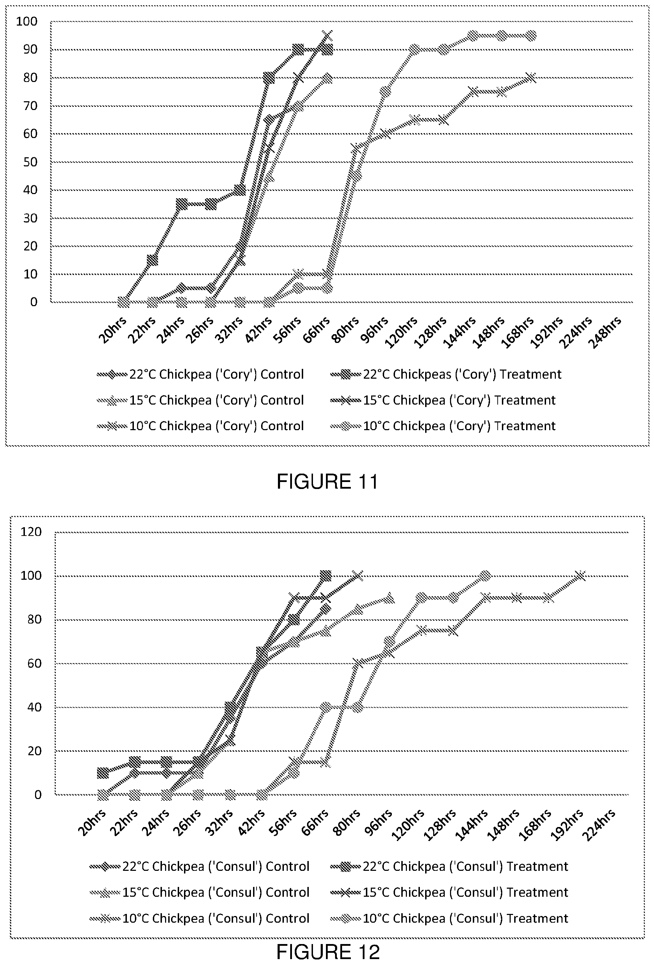

Results of the germination time courses for chickpea cultivars 'Cory', 'Consul' and 'Leader' are shown in Figures 11, 12 and 13, respectively. Catalytic treatment significantly induced chickpea 'Cory' % germination at 22, 15 and 10°C over controls. Catalytic treatment somewhat induced chickpea 'Consul' germination at 22, 15 and 10°C over controls, and catalytic treatment significantly induced chickpea 'Leader' germination at 22 and 15°C.

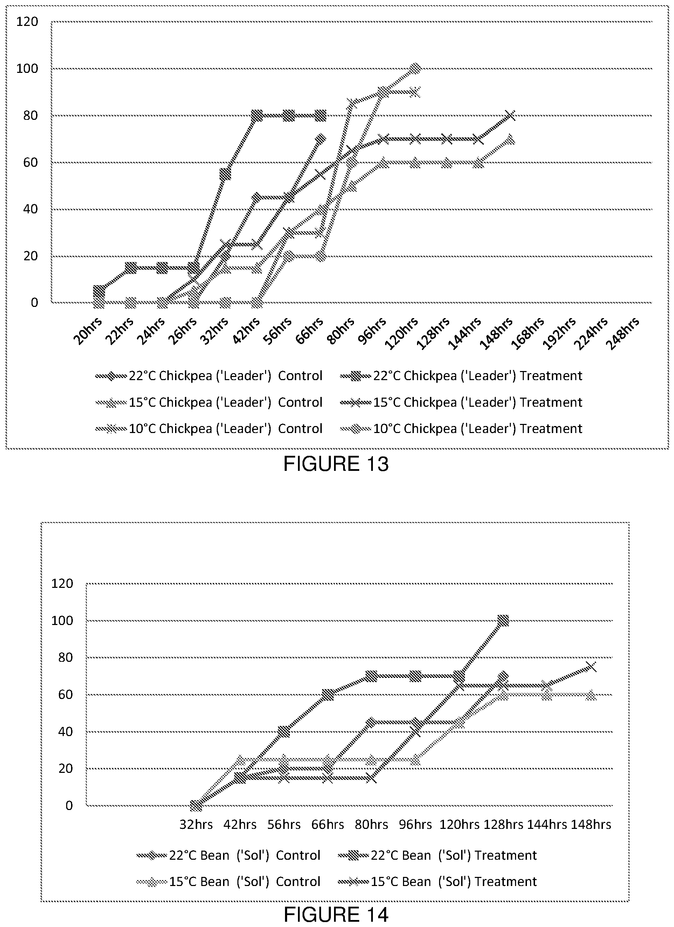

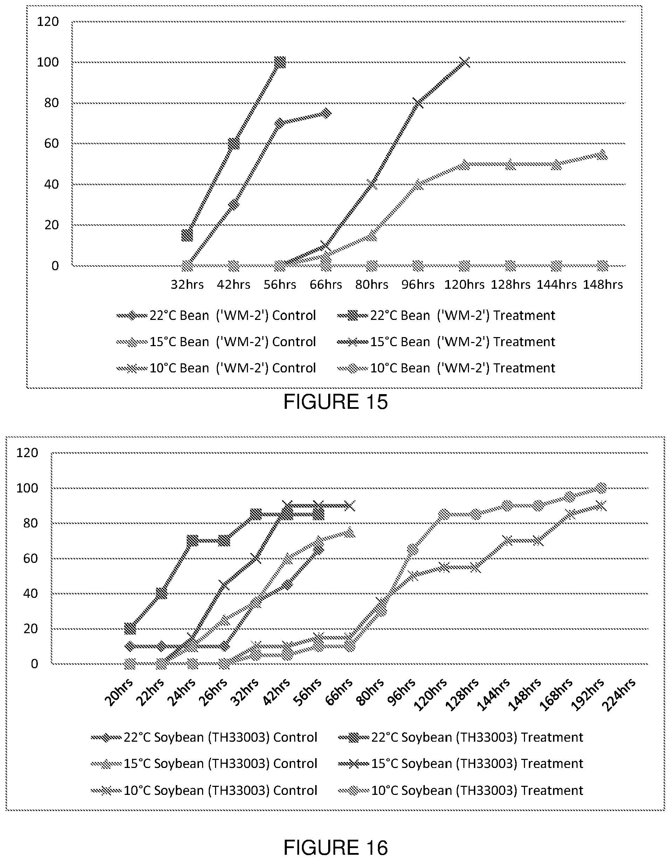

Results of the germination time courses for bean cultivars 'Sol' and 'WM-2' are shown in Figures 14 and 15, respectively. For bean cultivar 'Sol', significant treatment enhancement of germination (%) was observed at both 22°C and 15°C. Germination (%) was also enhanced for bean cultivar 'WM-2' at both 22°C and 15°C. Without being bound by theory, variation in seed soaking time between the time course (line graph shown in the figures, 2 hrs soaking, 2 experiments) and the single time point sampling listed in Table 6 below (1 hr soaking, 6 replications) may account for the observed differences in % germination. For both bean cultivars tested, no germination was observed in either control or treated groups at 10°C.

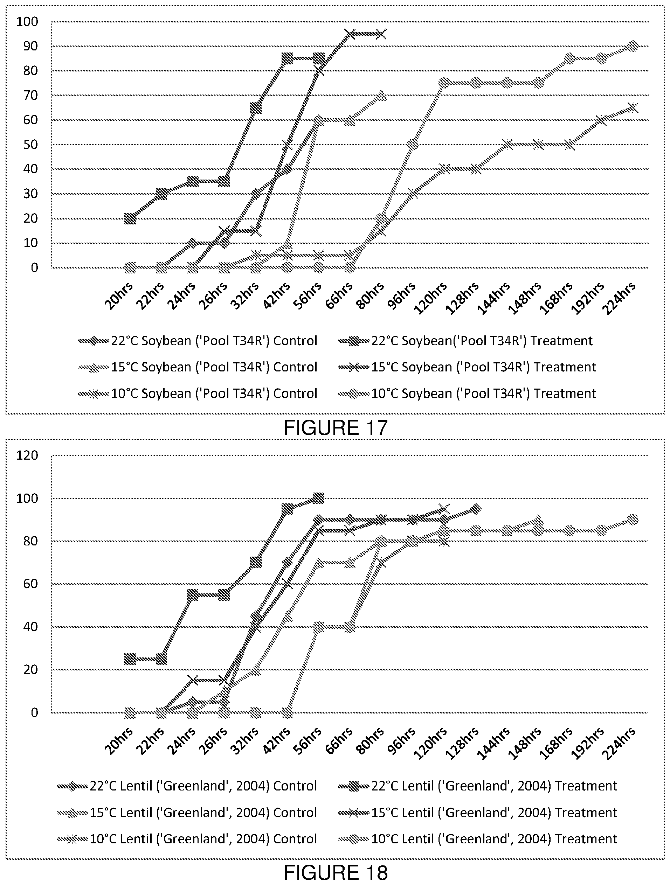

Results of the germination time courses for soybean cultivars 'TH33003R2Y' and 'Pool T34R' are shown in Figures 16 and 17, respectively. For soybean 'TH33003R2Y' at 22°C, 15°C, and 10°C, a significant increase in germination with catalytic treatment was observed at all three temperatures. For soybean 'Pool T34R', a significant increase in germination with catalytic treatment was observed at 22, 15 and 10°C. Without being bound by theory, variation in soaking time between the time course (line graph shown in the figures, 2 hrs soaking, means of 2 experiments) and single time point sampling listed in Table 6 below (1 hr soaking, 6 replications) may account for differences observed in % germination.

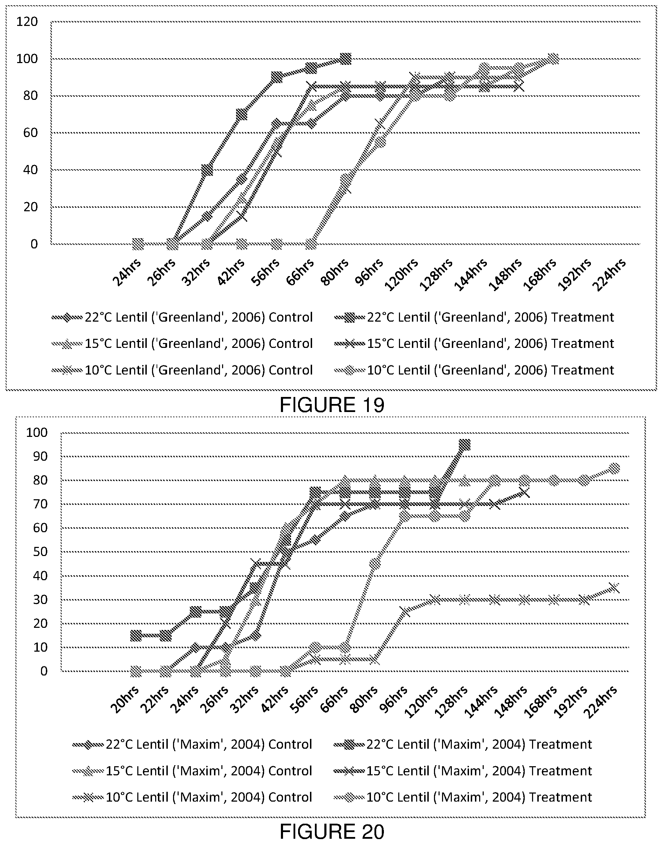

Results of the germination time courses for lentil cultivars 'Greenland' 2004, 'Greenland' 2006 and 'Maxim' 2004 are shown in Figures 18, 19 and 20, respectively. For lentil 'Greenland' 2004 (old seed), a significant treatment effect on increasing germination (%) rate was observed at 22°C and 15°C. Aged seeds have limited oxygen bioavailability and therefore, are prone to lower germination rates and reduced seedling vigour (Liu et al., 2012). Treatment also increased germination of lentil cultivars 'Greenland' 2006 and 'Maxim' 2004 at 22°C, and significantly increased germination of 'Maxim' 2004 at 10°C.

A summary of the increase in germination observed for the six replicates of each cultivar at the selected time points is presented in Table 6.

**Table 6. Increase in germination of legume/pulse crop seeds subjected to catalytic treatment.**

| | | **Treatment % germination minus Control % germination *significant mean % germination increase (at a single selected time point hrs)** | | |
|---|---|---|---|---|
| **Crop** | **Cultivar** | **22°C** | **15°C** | **10°C** |
| Chickpea | 'Cory' | *40% (33 hrs) | *54% (46 hrs) | *48% (96 hrs) |
| | 'Consul' | 10% (20 hrs) r.n.p. | 20% (56 hrs) r.n.p. | 25% (66 hrs) r.n.p. |
| | 'Leader' | *28% (34 hrs) | 15% (56 hrs) r.n.p. | -10% (56 hrs) r.n.p. |
| Beans | 'Sol' | *44% (46 hrs) | *25% (116 hrs) | 0% r.n.p. |
| | 'WM-2' | *15% (46 hrs) | 26% (105 hrs) n.s. | 0% r.n.p. |
| Soybean | 'TH33003R2Y' | *40% (24 hrs) | *30% (46 hrs) | *30% (105 hrs) |
| | 'Pool T34R' | *17% (24 hrs) | *30% (46 hrs) | *34% (105 hrs) |
| Lentils | 'Greenland' 2004 | *45% (24 hrs) | -15% (24 hrs) r.n.p. | 10% (80 hrs) r.n.p. |
| | 'Greenland' 2006 | *58% (45 hrs) | 10% (66 hrs) r.n.p. | -10% (96 hrs) r.n.p. |
| | 'Maxim' 2004 | 15% (20 hrs) r.n.p. | 15% (26 hrs) r.n.p. | 40% (80 hrs) r.n.p. |

| | | | | |
|---|---|---|---|---|
| r.n.p. = Replications not performed (at a single time point); n.s. = not significant at 5% level. | | | | |

Treatments significantly increased rate of germination for all tested legume/pulse crops compared to controls, at both warmer and lower temperatures, depending upon the crop and cultivar. Catalytic treatment significantly induced Chickpea 'Cory' % germination at 22, 15 and 10°C. Similarly, both soybean cultivars responded to treatment across the 22, 15 and 10°C germination temperatures. Treatment also significantly increased % germination in beans and lentils but only at 22°C. Responses varied by cultivar within the same crop by as much as 30% under the same catalytic treatment, germination temperature and time. Without being bound by theory, it is believed that optimization of treatment conditions for each individual cultivar could improve results.

Based on the foregoing results, it can be soundly predicted that treatment of legume/pulse crop seeds with catalytic compositions according to some embodiments of the present invention will enhance germination of those seeds. Further, given the conservation of germination mechanisms across plant species, it can be soundly predicted that treatment of plant seeds with catalytic compositions according to some embodiments of the present invention will enhance germination of those seeds.

### Example 12 - Enhancing Germination of Horticulture Crops Using Catalytic Treatment

The following horticulture crops were assessed to examine the ability of catalytic treatment with an exemplary embodiment to enhance germination of horticulture crops: corn (*Zea mays* 'Extra Early Supersweet'); onion (*Allium sativum* 'Early Yellow globe'); cucumber (*Cucumis sativus* 'Pioneer F1 Hybrid'); beans (*Phaseolus vulgaris* 'Improved Golden Wax'); and sweet pea flowers (*Lathyrus odoratus* 'Bijou Mix'). Experiments were carried out as described above, with seeds being allowed to imbibe the control buffer and treatment for 2 hrs at 22°C in the light (ca. 40 µmolm⁻²s⁻¹). Twenty seeds per petri plate in 162 petri dishes were put onto three layers of 9.0 cm filter paper (Fisher Scientific Toronto ON, Porosity: medium, Flow Rate: slow, Catalogue # 09-801B) in 9.0 cm plastic petri plates (Fisher Scientific Toronto ON) with lids. The following day, control buffer and treatment solutions were freshly made and between 5 - 8 ml of each were immediately added to their respective petri dishes with seeds.

Germination time courses were performed twice to generate the data presented in line graphs and germination evaluated as above depending on the germination temperature. Then, a single time point was selected representing the earliest time of germination with marked differences in germination. Six replications (20 seeds per petri dish) were subsequently performed at that time point under the same treatment concentration and 1 hr incubation and subsequent % germination evaluation under dark conditions (results shown in Table 7 below).

**Table 7. Enhancement of germination of horticulture crop seeds by catalytic treatment.**

| | | **Treatment minus Control *significant mean % germination increase (according to a single time point hrs)** | | |
|---|---|---|---|---|
| Crop | **Cultivar** | **22°C** | **15°C** | **10°C** |
| Corn | 'Extra Early Supersweet' | *22% (96 hrs) | *15% (168 hrs) | 0% |
| Onion | 'Early Yellow globe' | *63% (96 hrs) | -10% (72 hrs) r.n.p. | 40% (186 hrs) r.n.p. |
| Cucumber | 'Pioneer F1 Hybrid' | -31% (22 hrs) r.n.p. | 7% (72 hrs) n.s. (note: 40% (70 hrs) increase with 2 hr seed soaking) | 0% |
| Beans | 'Improved Golden Wax' | 10% (46 hrs) r.n.p. | -40% (70 hrs) r.n.p. | 0% |
| Sweet Pea | 'Bijou Mix' | *12% (96 hrs) | *18% (154 hrs) | 30% (166 hrs) r.n.p. |

| | | | | |
|---|---|---|---|---|
| r.n.p. = replications not performed (at a single time point); n.s. = not significant | | | | |

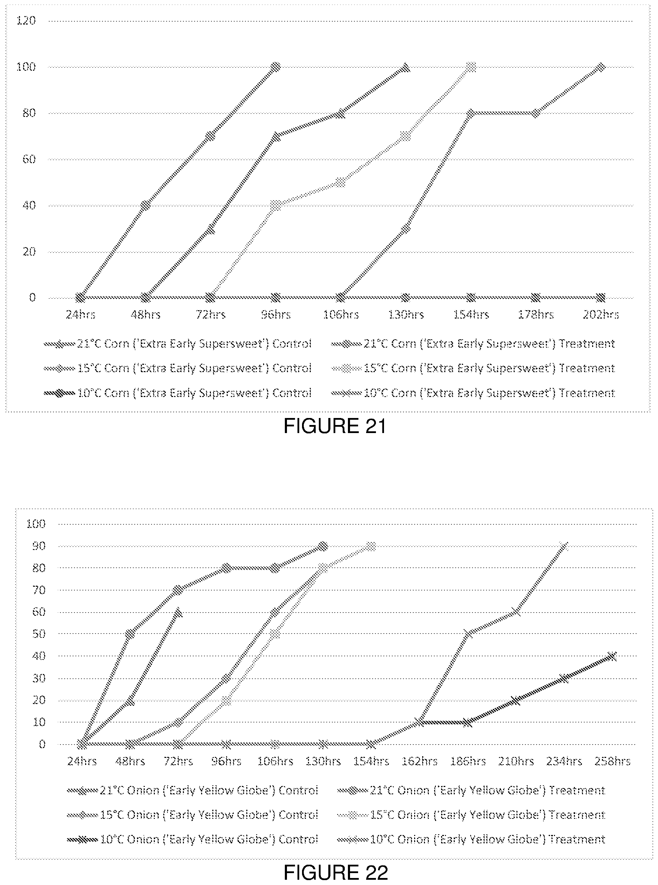

For sweet corn cultivar 'Extra Early Supersweet' hybrid germination (%), treatment significantly enhanced germination of sweet corn under 22 and 15°C but no germination was observed under 10°C of either control or treated seeds. There was a 22% and 15% increase in % germination rate at 22°C and 15°C respectively. Results showing germination over time are shown in Figure 21.

The onion cultivar tested was 'Early Yellow Globe'. Onion is notoriously slow to germinate and onion growers need more synchronous germination for direct seeding in the field. Hence, treatments that can enhance and synchronize germination of onion may be of considerable interest. Treatment with catalytic reaction significantly increased germination rate of the tested onion cultivar both in the linear time course (Figure 22, 2 replications) and the single time point measurement (Table 7, 6 replications). At 22°C, treatment induced a 63% germination increase in onion seeds compared to seeds soaked with control buffer.

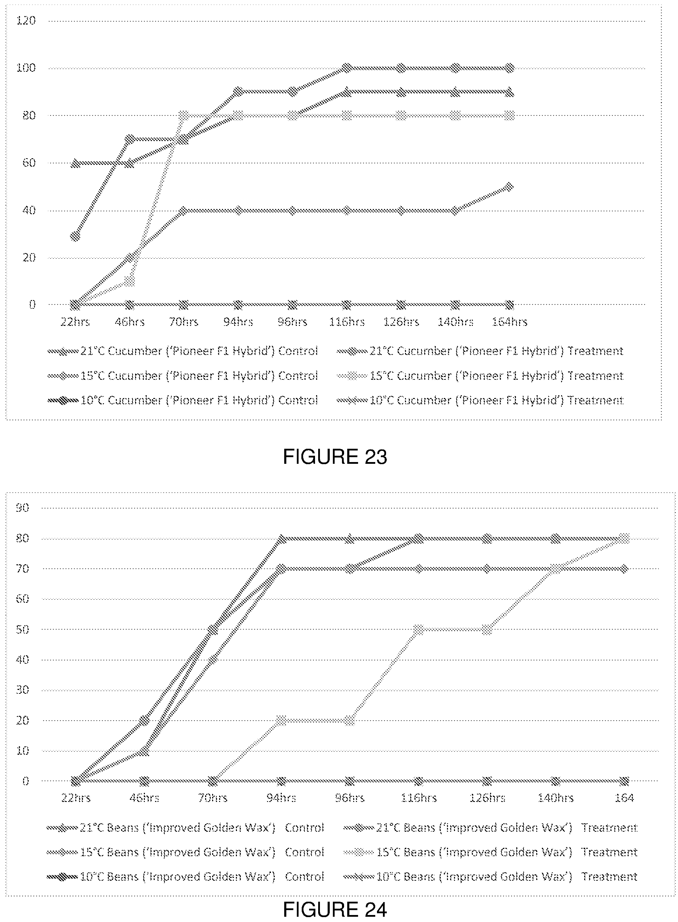

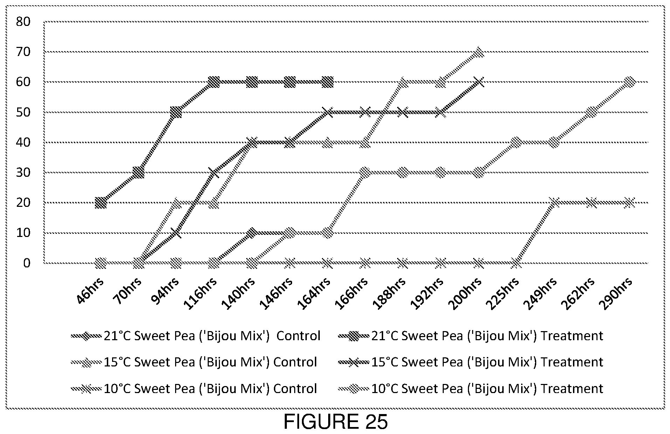

The ornamental sweet pea % germination was significantly enhanced under treatment at both 22°C and 10°C temperatures (Figure 25). Germination of cucumber 'Pioneer F1 Hybrid' was significantly enhanced at 15°C, and somewhat enhanced at 22°C (Figure 23). Germination of bean cultivar 'Improved Golden Wax' was enhanced somewhat at 22°C (Figure 24).

Given the results of the foregoing experiment, one skilled in the art could soundly predict that treatment of seeds of horticulture crops and other plants with catalytic compositions according to some embodiments of the present invention can be used to enhance the germination and synchronization of those seeds.

### Example 13 - Enhancement of Malting Barley Seedling Growth after Catalytic Treatment

A series of experiments was conducted to demonstrate the positive effects of treatment with catalytic compositions according to an example embodiment on shoot and root growth of malting barley under 23, 15 and 10°C. For experiments assessing seedling growth at 23°C, twenty seeds per treatment per barley cultivar 'Meredith' and 'Copeland' were placed into petri plates. Seeds were allowed to imbibe the control buffer and treatment for 1 hr at 22°C in the light (ca. 40 µmolm⁻²s⁻¹). At the end of the hour, 2 seeds were planted into each of ten 4" pots per cultivar per treatment with Sunshine Mix #4 and grown at 23°C (28°C under the lights). For experiments assessing seedling growth under a temperature-dose and time course, thirty seeds per treatment per barley cultivar 'Meredith' and 'Copeland' were placed into petri plates. Seeds were allowed to imbibe the control buffer and treatment for 1 hr at 22°C in the light (ca. 40 µmolm⁻²s⁻¹). At the end of the hour, seeds were planted into 4" pots with Sunshine Mix #4. Sixty pots with two seeds per pot, 10 pots per cultivar per treatment per temperature (23, 15 and 10°C) were planted.

An experiment assessing the growth of barley seedlings after seed treatment under 23°C for both the 'Meredith' and 'Copeland' barley cultivars showed greater root mass after 192 hours based on seedlings germinated from treated seed as compared with seedlings germinated from control seed. Root mass proliferates near the seed and continues to grow and branch into secondary and tertiary fibrous roots. Both malting barley cultivars 'Meredith' and 'Copeland' appeared to have greater primary root growth under catalytic treatment compared to control plants under all temperatures (23, 15, 10°C). This response was particularly evident under lower temperature conditions of 15 and 10°C with approximately 30 - 50% greater volume of roots induced by the treatment. Greater lateral root growth under 23°C was observed by 14 days but was not evident earlier. Greater root growth was accompanied by higher leaf number.

Based on the results of this example and the observed enhancement of germination of barley seeds and other plant seeds, it can be predicted that treatment with catalytic compositions according to some embodiments can enhance subsequent seedling growth of treated plant seeds (as well as enhancing germination of those plant seeds as shown in previous Examples).

### Example 14 - Enhancement of Germination and Seedling Growth by Seed Priming using Catalytic Treatment

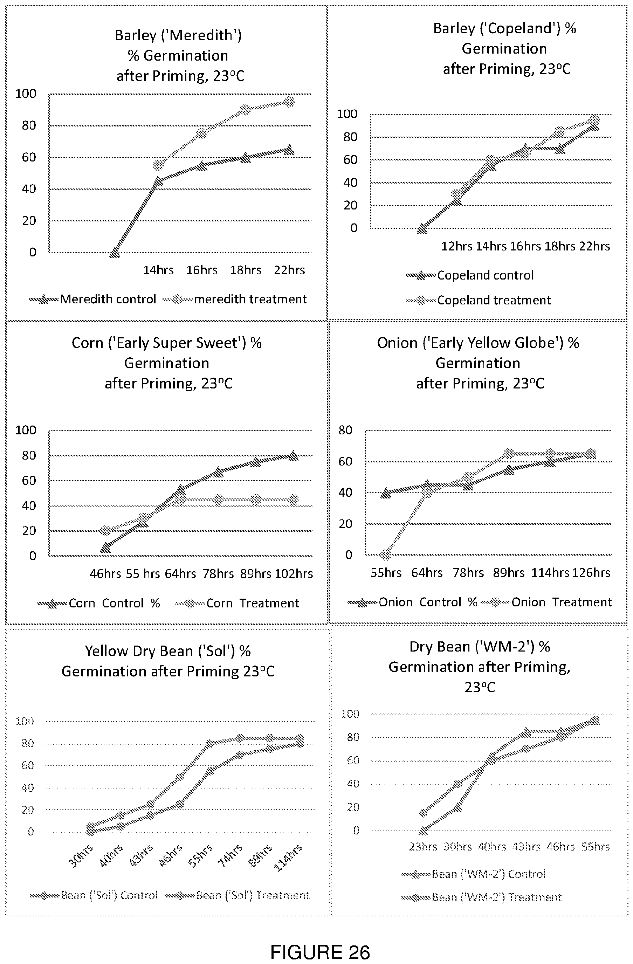

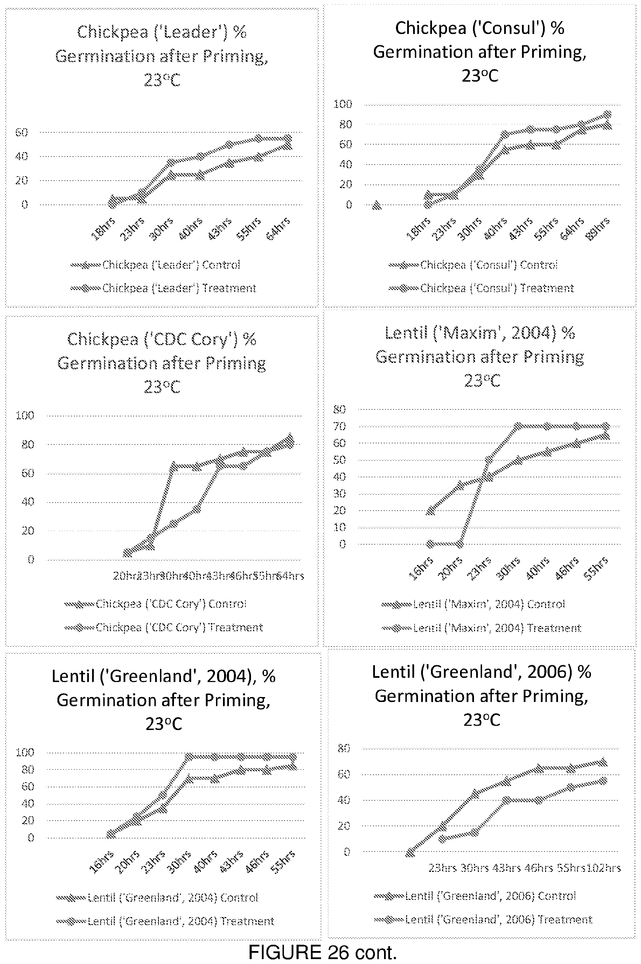

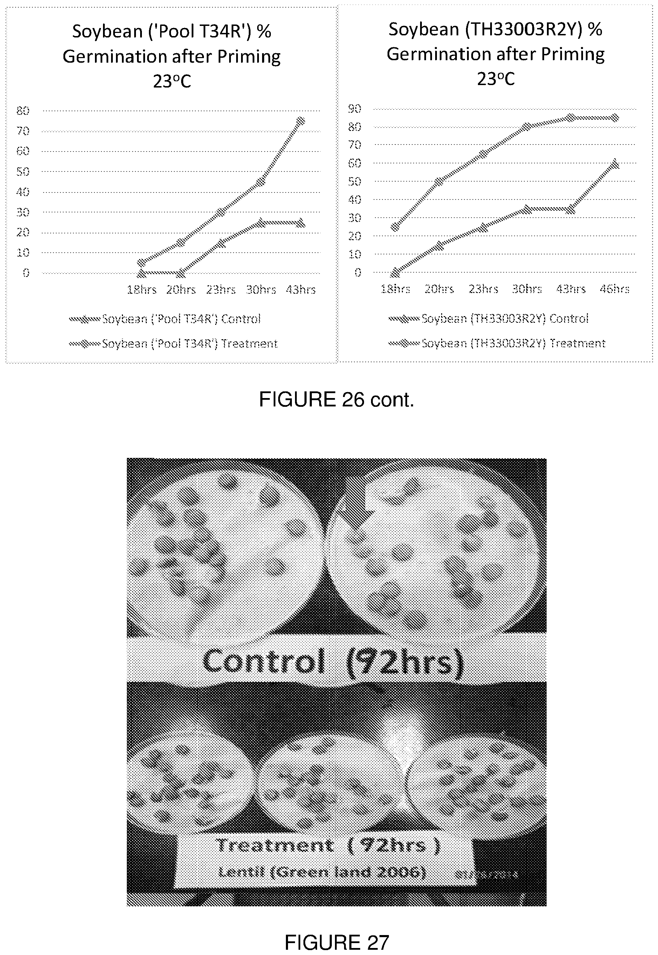

A series of experiments was carried out to determine if seed priming with the catalytic treatment will increase % germination and seedling growth. All germination experiments were conducted in the dark in the lab at 23°C. The following crops were evaluated over a time course (results shown in Figure 26): malting barley ('Meredith' and 'Copeland'), corn ('Early Super Sweet'), onion ('Yellow globe'), Yellow Field Bean ('Sol'), Bean ('WM-2'), Chickpea ('Leader', 'Consul' and 'CDC Cory'), Lentil ('Greenland' 2004 seedlot, 'Greenland' 2006 seedlot, 'Maxim' 2004 seedlot), soybean ('Pool T34R' and 'TH33003R2Y'). Five seeds per petri plate, four petri plates per crop/cultivar per treatment = 112 petri plates in total were used. Seeds were put onto three layers of 9.0 cm filter paper (Fisher Scientific Toronto ON, Porosity: medium, Flow Rate: slow, Catalogue # 09-801B) in 9.0 cm plastic petri plates (Fisher Scientific Toronto ON) with lids. The following day, control buffer and treatment were freshly made and between 5 - 8 ml of each were immediately added to their respective petri dishes with seeds.

Seeds were primed according to the following protocol: 1 hr seed soaking in control and treatment solutions in the light. After one hour, control buffer and treatment solutions were drained. Seeds were placed onto dry filter paper for about 5 days of drying (back to original seed weight at 23°C) and primed seeds of both control and catalytic treatment were subsequently both re-imbibed in control buffer for the germination tests. Germination was conducted at 23°C in the dark. Petri dishes were placed in the dark at 23°C and germination counted over time. Experiments were also conducted re-imbibing seeds primed with catalytic treatment in catalytic reaction buffer, but further optimization of conditions was determined to be required for plants other than soybeans.

Seed priming using catalytic treatment solution followed by germination at 23°C in control buffer was effective in increasing seed germination in several crops and cultivars: barley 'Meredith' from 65% (primed with control buffer) to 95% (primed with treatment) at 22 hrs of germination; onion 'yellow globe' from 65% (primed with control buffer) to 75% (primed with treatment) at 89 hrs of germination; yellow bean 'Sol' from 55% (primed with control buffer) to 80% (primed with treatment) at 55 hrs of germination; chickpea 'Leader' from 25% (primed with control buffer) to 40% (primed with treatment) at 40 hrs of germination; chickpea 'Consul' from 55% (primed with control buffer) to 70% (primed with treatment) at 40 hrs of germination; lentil 'Maxim ' 2004 seedlot from 50% (primed with control buffer) to 70% (primed with treatment) at 30 hrs of germination; lentil 'Greenland' 2004 from 70% (primed with control buffer) to 95% (primed with treatment) at 30 hrs of germination; soybean 'Pool T34R' from 25% (primed with control buffer) to 75% (primed with treatment) at 43 hrs of germination; soybean 'TH3300 3R2Y' from 35% (primed with control buffer) to 85% (primed with treatment) at 43 hrs of germination.

Root and shoot mass appeared to be increased by the catalytic treatment based on visual observations for seed priming in: yellow bean 'Sol'; chickpea 'Consul', 'Leader' and 'CDC Cory'; soybean 'Pool T34R' 'TH3300 3R2Y', and corn 'Early Super Sweet'. Quantitative data on internode length in chickpea, dry weight biomass of root and shoot may provide good parameters to assess efficacy of priming treatment.

A second experiment was conducted to assess the effect of catalytic treatment used for both seed priming and for subsequent germination. Experiments were conducted as above, except that after seeds were dried, primed seeds of both control and catalytic treatment were subsequently re-imbibed in control buffer and treatment solution (as opposed to control buffer for all samples as was used in the experiment described above) for the germination tests. Germination was conducted at 23°C in the dark. After a period of 8 days, all plants were then transferred to 15°C Phytotron chambers and grown for an additional 10 days.

Treatment generally increased root mass (there appeared to be more primary roots) compared to control seeds primed with buffer solution in yellow bean, chickpea, soybean and corn, with approximately 30-50% enhanced root mass and subsequent shoot growth observed. Shoot growth appeared to be advanced in sweet corn. Average shoot height and average root length was increased in soybeans. Onion seeds were killed by this treatment, which might be avoided by using a shorter treatment time and/or lower concentration of catalytic solution. Chickpea internode length was reduced by the treatment in all cultivars examined, which may be advantageous to avoid lodging.

Based on the foregoing results with a number of different plant species, one skilled in the art could soundly predict that priming seeds using catalytic compositions according to some embodiments can be used to both enhance germination of plant seeds and subsequent growth of seedlings from those seeds.

### Example 15 - Disease Suppression by Treating Seeds with Catalytic Reaction

Reducing seed-borne disease is considered the primary and preferred method to reduce the presence of disease in the field. Even a seed-borne disease rate as low as 0.1% is considered significant, particularly for ascochyta blight which is a serious disease of chickpea and lentil in Saskatchewan. Thus, there is considerable interest in treatments that can reduce disease.

Observations were made as other experiments were being carried out to examine the utility of treatment of seeds with a catalytic reaction according to one example embodiment in the prevention of diseases, in this example microbial growth.

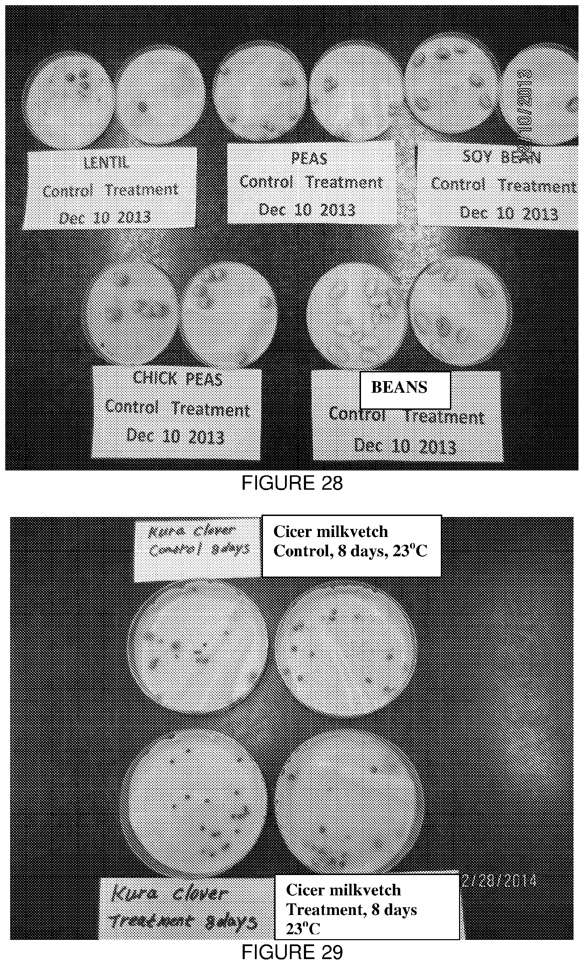

The treatments appeared to significantly reduce fungal and/or bacterial growth in the plates at 23°C temperatures. Fungal and/or bacterial growth was less pronounced at lower temperatures but nevertheless the treatment effect was similar. The microorganisms were found growing on the seed as well as on the filter paper. The reduction of microorganism growth by the treatment was independent of seed type but appeared to be quite pronounced on pulse crops (lentils 'Greenland', beans 'CDC Sol', peas 'Meadow' and chickpeas 'Leader') and on soybeans 'Pool T34R' (results shown in Figure 28).

Results of experiments on lentils (cultivar 'Greenland' 2006) (Figure 27 shown after 92 hours) showed that fungal and/or bacterial growth was significantly reduced by catalytic treatment for all seeds evaluated. Fungal and/or bacterial growth was visible on control seeds treated with buffer only (top panel, arrow indicates an example of microorganism growth), and fungal and/or bacterial growth could also be observed on the filter paper. Also, very few seeds germinated in the control group. In contrast, treated seeds showed no visible fungal or bacterial growth on the filter paper and seeds appeared healthy, with a greater proportion of seeds germinating after 92 hours. Treatment reduced incidence of fungal and/or bacterial growth in lentil cultivar 'Greenland' by about 99% compared to controls at 23°C by 92 hrs.

Figure 28 shows the results of similar experiments after 5 days at 23°C using the cultivars listed above. Germinated seeds have already been removed from the petri dishes resulting in unequal numbers of remaining seeds.

Figure 29 shows the results of similar experiments conducted on forage seeds Kura Clover (*Trifolium ambiguum* 'Endura') and Cicer milkvetch (*Astragalus cicer* 'Oxley') after 8 days of germination. Again, fungal growth was visible on both seeds and filter paper in the control groups, but was observed only to a lesser extent on treated seeds. These results show that catalytic treatment of seeds using example embodiments can be used to prevent disease in other plant species including forage crops.

### Example 16 - Priming Forage Crop Seeds Using Catalytic Treatment

An experiment was conducted to determine if catalytic treatment with an example embodiment could increase germination of Cicer Milkvetch (*Astragalus cicer* 'Oxley') under different germination temperatures. Cicer Milkvetch is likely the most difficult forage crop to germinate across the Canadian prairies. Finding a treatment which will provide a more consistent germination percentage would be of high interest to forage producers. Cicer Milkvetch (*Astragalus cicer* 'Oxley') seeds were soaked for 1 hr at 23°C in control and catalytic treatment solutions and then subsequently dried down to original seed weight as previously described for the other seed priming experiments. The concentration of catalytic treatment solution used was as described above, except that dose-response was evaluated by testing different dilutions of the catalytic treatment solution (i.e. 12.5%, 25%, 50% or 100% of the concentration tested in previous seed priming experiments). Seed was then germinated in control buffer at different temperatures including 23, 15 and 10°C. Germination was observed over a period of 14 days.

The results of this experiment are shown in Table 8. There was a marked enhancement of germination at a relatively low concentration of catalytic treatment solution (i.e. 25% concentration), while a higher dose (100% concentration of catalytic treatment solution) was required to effect an enhancement of germination at the lower 10°C germination temperature. It is possible that cicer milkvetch seeds have a dormancy which was broken by catalytic treatment at lower temperatures.

Based on the foregoing results, treatment with catalytic solutions according to some embodiments has the potential to improve germination of the difficult to germinate forage crop Cicer Milkvetch and may break seed dormancy in this species, and it can be soundly predicted that treatment with catalytic solutions will be effective to enhance germination in other plant species, including in other difficult to germinate forage species.

**Table 8. Final percentage germination of Cicer Milkvetch seeds under different temperatures after 14 days.**

| Treatment Concentration | 23°C | 15°C | 10°C |
|---|---|---|---|
| 100% | 30 | 40 | 80 |
| 50% | 50 | 60 | 30 |
| 25% | 60 | 100 | 40 |
| 12.5% | 40 | 50 | 50 |
| 0% | 45 | 47.5 | 40 |

### Example 17 - Enhancing Germination of Plants Experiencing Salt Stress

Experiments were carried out to assess the utility of catalytic treatment according to an example embodiment in enhancing germination of plants experiencing salt stress in the form of an increased concentration of sodium chloride (NaCl) (200 mM). Crops under evaluation included a grain crop (spring wheat 'CDC Utmost') and representative legume/pulse crops (lentil 'CDC Greenland' and pea 'CDC Golden'). Seeds were soaked with 100%, 50%, 25%, 12.5% (catalytic treatment solution, concentration relative to the concentration used in previous experiments) and 0% (control buffer) for 1 hr (wheat) and 2 hrs (lentil and peas) at 23°C to assess dose-response. Ten seeds of each cultivar were placed onto dry filter paper and incubated in 200 mM NaCl (in deionized water) added to individual petri plates. All germination tests were conducted in the dark at 23°C.

The results of this experiment are shown in Table 9. Germination was then assessed at an average 23°C at 200 mM NaCl salt stress. Salt-stressed crops generally had a higher percentage and faster rate of germination after pre-treatment with the catalyst. This response was catalyst dose-dependent. Since various crops have differentially inherent salt stress sensitivities, the efficacy of the treatment varied accordingly. Based on the results of this experiment, the catalyst pre-treatment appears to enhance germination under salinity conditions even at a high 200 mM NaCl condition (40% sea water) relative to untreated controls.

Based on the results of this experiment and the enhanced germination and seedling growth observed in the examples above, one skilled in the art could soundly predict that pre-treatment of seeds of grain crops, legume/pulse crops, and other plant species with catalytic compositions according to example embodiments can enhance germination of seeds that will be planted in areas prone to salt stress. Because the biochemical mechanism of responding to stress is similar in plants, it can also be soundly predicted that pre-treatment of seeds with catalytic compositions according to example embodiments can enhance germination of seeds that will be planted in areas prone to other stresses, e.g. high or low moisture levels, anaerobic stress, high or low temperatures, inadequate amounts of one or more nutrients, or the like.

**Table 9. Percentage germination of seeds subject to catalytic treatment and 200 mM NaCl salt stress.**

| Crop | Treatment Concentration | 24 hrs | 48 hrs |
|---|---|---|---|
| Spring Wheat | 100% | 10 | 100 |
| 'CDC Utmost' | 50% | 30 | 90 |
| | 25% | 30 | 60 |
| | 12.5% | 20 | 40 |
| | 0% | 30 | 30 |
| Lentil | 100% | 20 | 50 |
| 'CDC Greenland' | 50% | 10 | 60 |
| | 25% | 30 | 70 |
| | 12.5% | 10 | 40 |
| | 0% | 0 | 10 |
| Peas | 100% | 0 | 50 |
| 'CDC Golden' | 50% | 0 | 30 |
| | 25% | 10 | 30 |
| | 12.5% | 10 | 10 |
| | 0% | 10 | 10 |

## Claims

1. A method of enhancing germination of seeds comprising combining a transition metal catalyst that generates reactive oxygen species, an aqueous buffer and hydrogen peroxide in solution at an acidic pH and exposing the seeds to the solution for a period of between 30 minutes and 240 hours,
wherein the transition metal catalyst comprises
- a nanoparticulate catalyst bearing one or more transition metals, wherein the nanoparticulate catalyst comprises calcium carbonate, optionally present as calcite, with iron coated on or otherwise finely dispersed on or in the nanoparticle, and wherein the nanoparticulate catalyst is optionally present in an amount of between 1 ppm and 500 ppm;
- a multi-walled or single-walled carbon nanotube impregnated with Fe, Mo, Rh, Co, or a combination thereof; and/or
- a transition metal salt, wherein the transition metal salt is FeSO₄ or a cobalt salt.

2. The method of claim 1, wherein the solution has a pH in the range of 3.0 to 6.0, or in the range of 4.5 to 5.0.

3. The method of claim 1 or claim 2, wherein the seeds are exposed to the solution for a period of between 1 and 240 hours, or for a period of between 30 minutes and 4 hours,
preferably wherein the seeds are exposed to the solution for a period of between 1 and 240 hours.

4. The method as defined in any one of the preceding claims, wherein
the buffer comprises a polyvalent carboxylic acid present in the solution at a concentration between 5 mM and 100 mM, wherein the polyvalent carboxylic acid optionally comprises citrate, oxalate, aconitate, isocitrate, alpha-ketoglutarate, succinate, fumarate, malate, oxaloacetate, pyruvate and/or a mixture thereof; and /or
the hydrogen peroxide is present at a concentration of between 0.1% and 0.5% by volume.

5. The method of any one of the preceding claims, wherein the seeds are exposed to the solution containing the transition metal catalyst at a temperature between 0°C and 50°C, optionally at a temperature between 5°C and 25°C, and wherein optionally germination is conducted a temperature between 10°C and 25°C.

6. The method of any one of the preceding claims, comprising treating the seeds by priming or surface application with or without gels;
preferably wherein the method comprises treating the seeds by surface application.

7. The method of any one of the preceding claims, for enhancing the germination of grains for malting;
preferably wherein the grains are cereal grains;
most preferably wherein the cereal grains comprise barley seeds.

8. The method as defined in any one of the preceding claims, wherein the seeds are germinated under stressful conditions, and wherein the stressful conditions optionally comprise high or low temperature, high or low moisture, anaerobic stress, inadequate amounts of one or more nutrients, and/or high salinity.

9. The method of any one of the preceding claims, to do one or more of:
hastening the emergence of radicles from seeds;
stimulating and/or increasing the rate and/or degree of rooting by seeds;
stimulating and/or increasing shoot emergence and/or the emergence of leaves from seeds;
causing seeds to germinate within a more narrow span of time than untreated seeds;
disinfecting seed prior to planting to protect seeds from pathogens such as disease and/or mold, including fungus or bacteria;
improving seed vigour;
facilitating more efficient utilization of the growing season by a crop grown from seeds;
breaking seed dormancy in seeds expressing a physical dormancy mechanism in the seed coat; or
increasing utilization of photosynthetic capacity by plants grown from seeds.

10. The method of any one of the preceding claims, wherein
the treatment period comprises between 1 and 4 hours; and/or
exposure of the seeds to the solution containing the transition metal catalyst is halted by washing the solution away from the seeds or by planting the seeds.

11. A method of producing stress resistant plants and/or commercially harvested plant parts comprising:
exposing plant seeds to a stressor;
treating the plant seeds according to the method as defined in any one of the preceding claims;
planting the seeds; and
selecting those plants that germinate as having an improved tolerance or resistance to the stressor.

12. A method of producing stress resistant plants and/or commercially harvested plant parts comprising:
treating the plant according to the method as defined in any one of claims 1 to 10;
planting the treated seeds under stressful conditions; and
selecting those plants that germinate as having improved tolerance or resistance to the stressor.

13. The method as defined in any one of the preceding claims, wherein the seeds comprise grains, oilseeds, legumes, pulses, horticulture crops, vegetable crops, seed tubers, forestry species, or trees.

## Patentansprüche

1. Verfahren zum Verbessern der Keimung von Samen, umfassend das Kombinieren eines Übergangsmetallkatalysators, der eine reaktive Sauerstoffspezies erzeugt, eines wässrigen Puffers und Wasserstoffperoxids in Lösung bei einem sauren pH-Wert und das Aussetzen der Samen gegenüber der Lösung für eine Dauer von zwischen 30 Minuten und 240 Stunden,
wobei der Übergangsmetallkatalysator
- einen nanopartikulären Katalysator, der ein oder mehrere Übergangsmetalle aufweist, wobei der nanopartikuläre Katalysator Calciumcarbonat umfasst, das optional als Calcit vorliegt, mit Eisen auf dem Nanopartikel beschichtet oder auf andere Weise auf oder in dem Nanopartikel fein dispergiert, und wobei der nanopartikuläre Katalysator optional in einer Menge zwischen 1 ppm und 500 ppm vorliegt;
- ein mehrwandiges oder einwandiges Kohlenstoffnanoröhrchen, das mit Fe, Mo, Rh, Co oder einer Kombination dieser getränkt ist; und/oder
- ein Übergangsmetallsalz, wobei das Übergangsmetallsalz FeSO₄ oder ein Kobaltsalz ist,
umfasst.

2. Verfahren nach Anspruch 1, wobei die Lösung einen pH-Wert im Bereich von 3,0 bis 6,0 oder im Bereich von 4,5 bis 5,0 aufweist.

3. Verfahren nach Anspruch 1 oder Anspruch 2, wobei die Samen der Lösung für eine Dauer von zwischen 1 und 240 Stunden, oder für eine Dauer von zwischen 30 Minuten und 4 Stunden, ausgesetzt werden.

4. Verfahren wie in einem der voranstehenden Ansprüche definiert, wobei
der Puffer eine in der Lösung vorhandene mehrwertige Carbonsäure in einer Konzentration zwischen 5 mM und 100 mM umfasst, wobei die mehrwertige Carbonsäure optional Citrat, Oxalat, Aconitat, Isocitrat, Alpha-Ketoglutarat, Succinat, Fumarat, Malat, Oxalacetat, Pyruvat und/oder eine Mischung davon umfasst;
und/oder
das Wasserstoffperoxid in einer Konzentration von zwischen 0,1 Vol.-% und 0,5 Vol.-% vorliegt.

5. Verfahren nach einem der voranstehenden Ansprüche, wobei die Samen der Lösung, die den Übergangsmetallkatalysator enthält, bei einer Temperatur zwischen 0 °C und 50 °C ausgesetzt sind, optional bei einer Temperatur zwischen 5 °C und 25 °C, und wobei die Keimung optional bei einer Temperatur zwischen 10 °C und 25 °C durchgeführt wird.

6. Verfahren nach einem der voranstehenden Ansprüche, umfassend das Behandeln der Samen durch Priming oder Oberflächenapplikation mit oder ohne Gelen;
wobei das Verfahren vorzugsweise das Behandeln der Samen durch Oberflächenapplikation umfasst.

7. Verfahren nach einem der voranstehenden Ansprüche zum Verbessern der Keimung von Körnern zum Mälzen;
wobei die Körner vorzugsweise Getreidekörner sind;
wobei die Getreidekörner am bevorzugtesten Gerstesamen umfassen.

8. Verfahren wie in einem der voranstehenden Ansprüche definiert, wobei die Samen unter Stressbedingungen gekeimt werden und wobei die Stressbedingungen optional hohe oder niedrige Temperatur, hohe oder geringe Feuchtigkeit, anaeroben Stress, unzureichende Mengen an einem oder mehreren Nährstoffen und/oder einen hohen Salzgehalt umfassen.

9. Verfahren nach einem der voranstehenden Ansprüche, um eines oder mehreres zu tun von:
Beschleunigen des Auftretens von Keimwurzeln aus Samen;
Stimulieren und/oder Erhöhen der Geschwindigkeit und/oder des Grades der Verwurzelung durch Samen;
Stimulieren und/oder Erhöhen des Triebauftretens und/oder des Auftretens von Blättern aus Samen;
Veranlassen der Samen, innerhalb eines engeren Zeitraums zu keimen als unbehandelte Samen;
Desinfizieren der Samen vor dem Pflanzen, um die Samen vor Erregern wie Krankheiten und/oder Schimmelpilzen, einschließlich Pilzen oder Bakterien, zu schützen;
Verbessern der Samenkraft;
Erleichtern einer effizienteren Nutzung der Vegetationsperiode durch ein aus Samen gewachsenes Getreide;
Brechen der Samenruhe in Samen, die einen physischen Keimruhemechanismus in der Samenschale ausdrücken; oder
Erhöhen der Nutzung der Photosynthesekapazität durch aus Samen gewachsene Pflanzen.

10. Verfahren nach einem der voranstehenden Ansprüche, wobei
die Behandlungsdauer zwischen 1 und 4 Stunden umfasst; und/oder
das Aussetzen der Samen gegenüber der Lösung, die den Übergangsmetallkatalysator enthält, durch Abwaschen der Lösung von den Samen oder durch Pflanzen der Samen gestoppt wird.

11. Verfahren zum Herstellen stressresistenter Pflanzen und/oder kommerziell geernteter Pflanzenteile, umfassend:
Aussetzen von Pflanzensamen gegenüber einem Stressfaktor;
Behandeln der Pflanzensamen gemäß dem in einem der voranstehenden Ansprüche definierten Verfahren;
Pflanzen der Samen; und
Auswählen derjenigen Pflanzen, die keimen, als die, die eine verbesserte Toleranz oder Resistenz gegenüber dem Stressfaktor aufweisen.

12. Verfahren zum Herstellen stressresistenter Pflanzen und/oder kommerziell geernteter Pflanzenteile, umfassend:
Behandeln der Pflanze gemäß dem in einem der Ansprüche 1 bis 10 definierten Verfahren;
Pflanzen der behandelten Samen unter stressigen Bedingungen; und
Auswählen derjenigen Pflanzen, die keimen, als die, die eine verbesserte Toleranz oder Resistenz gegenüber dem Stressfaktor aufweisen.

13. Verfahren wie in einem der voranstehenden Ansprüche definiert, wobei die Samen Körner, Ölsaaten, Leguminosen, Hülsenfrüchte, Gartenbaukulturen, Gemüsekulturen, Samenknollen, Forstpflanzen oder Bäume umfassen.

## Revendications

1. Procédé d'amélioration de la germination de graines comprenant la combinaison d'un catalyseur à métaux de transition qui génère des dérivés réactifs de l'oxygène, d'un tampon aqueux et de peroxyde d'hydrogène en solution à un pH acide et l'exposition des graines à la solution pendant une période entre 30 minutes et 240 heures,
dans lequel le catalyseur à métaux de transition comprend
- un catalyseur nanoparticulaire comportant un ou plusieurs métaux de transition, dans lequel le catalyseur nanoparticulaire comprend du carbonate de calcium, facultativement présent sous forme de calcite, avec du fer enduit sur ou finement dispersé sur ou dans la nanoparticule, et dans lequel le catalyseur nanoparticulaire est facultativement présent dans une quantité entre 1 ppm et 500 ppm ;
- un nanotube de carbone à parois multiples ou à paroi unique imprégné de Fe, Mo, Rh, Co, ou d'une combinaison de ceux-ci ; et/ou
- un sel de métal de transition, dans lequel le sel de métal de transition est FeSO₄ ou un sel de cobalt.

2. Procédé selon la revendication 1, dans lequel la solution présente un pH de 3,0 à 6,0, ou de 4,5 à 5,0.

3. Procédé selon la revendication 1 ou la revendication 2, dans lequel les graines sont exposées à la solution pendant une période entre 1 et 240 heures, ou pendant une période entre 30 minutes et 4 heures,
de préférence dans lequel les graines sont exposées à la solution pendant une période entre 1 et 240 heures.

4. Procédé selon l'une quelconque des revendications précédentes, dans lequel
le tampon comprend un acide carboxylique polyvalent présent dans la solution à une concentration entre 5 mM et 100 mM, dans lequel l'acide carboxylique polyvalent comprend facultativement le citrate, l'oxalate, l'aconitate, l'isocitrate, l'alpha-cétoglutarate, le succinate, le fumarate, le malate, l'oxaloacétate, le pyruvate et/ou un mélange de ceux-ci ; et/ou
le peroxyde d'hydrogène est présent à une concentration entre 0,1 % et 0,5 % en volume.

5. Procédé selon l'une quelconque des revendications précédentes, dans lequel les graines sont exposées à la solution contenant le catalyseur à métaux de transition à une température entre 0 °C et 50 °C, facultativement à une température entre 5 °C et 25 °C, et dans lequel facultativement la germination est réalisée à une température entre 10 °C et 25 °C.

6. Procédé selon l'une quelconque des revendications précédentes, comprenant le traitement des graines par apprêtage ou application de surface avec ou sans gels ;
de préférence dans lequel le procédé comprend le traitement des graines par application de surface.

7. Procédé selon l'une quelconque des revendications précédentes, pour améliorer la germination de graines pour le maltage ;
de préférence dans lequel les graines sont des graines de céréale ;
de manière préférée entre toutes dans lequel les graines de céréale comprennent les graines d'orge.

8. Procédé selon l'une quelconque des revendications précédentes, dans lequel la germination des graines est réalisée dans des conditions de stress, et dans lequel les conditions de stress comprennent facultativement une température élevée ou faible, une humidité élevée ou faible, un stress anaérobie, des quantités inadéquates d'un ou plusieurs nutriments, et/ou une salinité élevée.

9. Procédé selon l'une quelconque des revendications précédentes, pour effectuer une ou plusieurs parmi :
l'accélération de l'émergence de radicules à partir de graines ;
la stimulation et/ou l'augmentation du taux et/ou du degré d'enracinement par les graines ;
la stimulation et/ou l'augmentation de l'émergence de pousses et/ou l'émergence de feuilles à partir des graines ;
la germination des graines dans une fourchette de temps plus étroite que les graines non traitées ;
la désinfection des graines avant de les planter pour protéger les graines des pathogènes tels que la maladie et/ou la moisissure, incluant les champignons ou les bactéries ;
l'amélioration de la vigueur des graines ;
la facilitation d'une utilisation plus efficace de la saison de croissance d'une culture issue de graines ;
la levée de la dormance des graines dans des graines exprimant un mécanisme de dormance physique dans le tégument ; ou
l'augmentation de l'utilisation de la capacité photosynthétique par les plantes issues de graines.

10. Procédé selon l'une quelconque des revendications précédentes, dans lequel
la période de traitement comprend entre 1 et 4 heures ; et/ou
l'exposition des graines à la solution contenant le catalyseur à métaux de transition est stoppée en éliminant la solution des graines par lavage ou en plantant les graines.

11. Procédé de production de plantes résistantes au stress et/ou de parties de plantes récoltées commercialement comprenant :
l'exposition de graines de plante à un facteur de stress ;
le traitement des graines de plante selon le procédé tel que défini dans l'une quelconque des revendications précédentes ;
la plantation des graines ; et
la sélection des plantes qui germent comme ayant une tolérance ou une résistance améliorée au facteur de stress.

12. Procédé de production de plantes résistantes au stress et/ou de parties de plantes récoltées commercialement comprenant :
le traitement de la plante selon le procédé tel que défini dans l'une quelconque des revendications 1 à 10 ;
la plantation des graines traitées dans des conditions de stress ; et
la sélection des plantes qui germent comme ayant une tolérance ou une résistance améliorée au facteur de stress.

13. Procédé selon l'une quelconque des revendications précédentes, dans lequel les graines comprennent les grains, les graines oléagineuses, les légumineuses, les légumes secs, les cultures horticoles, les cultures maraîchères, les tubercules, les espèces forestières, ou les arbres.
